# EUROPEAN PATENT APPLICATION

(11) **EP 4 529 212 A1**
(43) Date of publication of application: **26.03.2025**
(21) Application number: 23826375.0
(22) Date of filing: 20.06.2023
(51) Int. Cl.: H04R 1/10

(54) **EARPHONE ASSEMBLY**

(30) Priority: 21.06.2022 CN 202210705712; 19.08.2022 CN 202211001691
(71) Applicant: Huawei Technologies Co., Ltd., Shenzhen, Guangdong 518129 (CN)
(72) Inventor: HU, Shiyan, Shenzhen, Guangdong 518129 (CN); MA, Jianzhen, Shenzhen, Guangdong 518129 (CN); ZHANG, Chongwei, Shenzhen, Guangdong 518129 (CN)
(74) Representative: Pfenning, Meinig & Partner mbB
(86) International application number: PCT/CN2023/101209
(87) International publication number: WO 2023/246727

(57) **Abstract**

This application discloses an earphone assembly, including a charging case, a first earphone, and a second earphone. The charging case includes a first electrode, a second electrode, a third electrode, and a fourth electrode. Both the first electrode and the second electrode are at least partially located in a first earphone slot, and both the third electrode and the fourth electrode are at least partially located in a second earphone slot. The second electrode and the third electrode are located between the first electrode and the fourth electrode. A polarity of the first electrode is the same as a polarity of the third electrode, and a polarity of the second electrode is the same as a polarity of the fourth electrode. A polarity of a first contact of the second earphone is the same as a polarity of a first contact of the first earphone, and a polarity of a second contact of the second earphone is the same as a polarity of a second contact of the first earphone. The first earphone is detachably accommodated in the first earphone slot, the first contact of the first earphone is in contact with the first electrode, and the second contact of the first earphone is in contact with the second electrode. The second earphone is detachably accommodated in the second earphone slot, the first contact of the second earphone is in contact with the third electrode, and the second contact of the second earphone is in contact with the fourth electrode. The earphone assembly has a long service life.

## Description

This application claims priority to Chinese Patent Application No. 202210705712.8, filed with the China National Intellectual Property Administration on June 21, 2022 and entitled "EARPHONE AND EARPHONE ASSEMBLY", which is incorporated herein by reference in its entirety. This application claims priority to Chinese Patent Application No. 202211001691.8, filed with the China National Intellectual Property Administration on August 19, 2022 and entitled "EARPHONE ASSEMBLY", which is incorporated herein by reference in its entirety.

### TECHNICAL FIELD

This application relates to the field of audio technologies, and in particular, to an earphone assembly.

### BACKGROUND

A current earphone assembly includes a charging case and two earphones. Because appearance designs of the two earphones are very similar, when a consumer places the earphone in the charging case, a case in which the earphone is incorrectly placed in the case is likely to occur, for example, the earphone is inserted into an incorrect earphone slot or the earphone is reversely inserted. However, because charging contacts of the earphone and electrodes of the charging case are distinguished by a positive electrode and a negative electrode, when the earphone is incorrectly placed in the case, a component of the earphone is prone to be damaged, and a service life of the earphone is shortened.

### SUMMARY

This application provides an earphone assembly. The earphone assembly can lower a risk of component damage when an earphone is reversely connected to a charging case, so that the earphone and the earphone assembly have a long service life.

An embodiment of this application provides an earphone assembly. The earphone assembly includes a charging case, a first earphone, and a second earphone. The charging case has a first earphone slot and a second earphone slot that are disposed at an interval. The charging case includes a first electrode, a second electrode, a third electrode, and a fourth electrode. Both the first electrode and the second electrode are at least partially located in the first earphone slot, and both the third electrode and the fourth electrode are at least partially located in the second earphone slot. The second electrode and the third electrode are located between the first electrode and the fourth electrode. A polarity of the first electrode is the same as a polarity of the third electrode, and a polarity of the second electrode is the same as a polarity of the fourth electrode.

The first earphone includes a first contact and a second contact that are disposed at an interval, and the second earphone includes a first contact and a second contact that are disposed at an interval. A polarity of the first contact of the second earphone is the same as a polarity of the first contact of the first earphone, and a polarity of the second contact of the second earphone is the same as a polarity of the second contact of the first earphone.

The first earphone is detachably accommodated in the first earphone slot, the first contact of the first earphone is in contact with the first electrode, and the second contact of the first earphone is in contact with the second electrode. The second earphone is detachably accommodated in the second earphone slot, the first contact of the second earphone is in contact with the third electrode, and the second contact of the second earphone is in contact with the fourth electrode.

In this application, when the first earphone and the second earphone are correctly placed in the charging case, the polarities of the contacts of the first earphone and the second earphone correspond to the polarities of the plurality of electrodes of the charging case, there is a correct connection, and the first earphone and the second earphone can normally communicate with the charging case and be charged. When the first earphone is placed in the second earphone slot, the second earphone is placed in the first earphone slot, and the first earphone and the second earphone are incorrectly placed in the charging case in a manner of reversely placing the two earphones, the first contact of the second earphone is in contact with the first electrode, the second contact of the second earphone is in contact with the second electrode, the first contact of the first earphone is in contact with the third electrode, and the second contact of the first earphone is in contact with the fourth electrode. The polarities of the contacts of the first earphone and the second earphone still correspond to the polarities of the plurality of electrodes of the charging case, and there is a correct connection. Therefore, damage to next circuits of the first earphone and the second earphone can be effectively avoided, and the earphone and the earphone assembly have a long service life.

The polarities of the first electrode to the fourth electrode of the charging case may be sequentially arranged as positive, negative, positive, and negative, or negative, positive, negative, and positive. When the first earphone and the second earphone are correctly placed in the charging case, the polarities of the plurality of contacts of the first earphone and the second earphone are sequentially arranged as positive, negative, positive, and negative, or negative, positive, negative, and positive.

In some possible implementations, both the first contact of the first earphone and the second contact of the first earphone are fastened to a housing of the first earphone, and are exposed relative to the housing of the first earphone; and both the first contact of the second earphone and the second contact of the second earphone are fastened to a housing of the second earphone, and are exposed relative to the housing of the second earphone. The housing of the first earphone and the housing of the second earphone are of mutually symmetric structures, the first contact of the first earphone is symmetrically disposed with the second contact of the second earphone, and the second contact of the first earphone is symmetrically disposed with the first contact of the second earphone.

When the first earphone is placed in the first earphone slot, and the first earphone is incorrectly placed in the charging case in a manner of implementing reverse placement through rotation, the first contact of the first earphone is in contact with the second electrode, the second contact of the first earphone is in contact with the first electrode, the polarities of the contacts of the first earphone are opposite to the polarities of the plurality of electrodes of the charging case, and a reverse connection occurs. When the first earphone is placed in the second earphone slot, and the first earphone is incorrectly placed in the charging case in a manner of implementing reverse placement through rotation, the first contact of the first earphone is in contact with the fourth electrode, the second contact of the first earphone is in contact with the third electrode, the polarities of the contacts of the first earphone are opposite to the polarities of the plurality of electrodes of the charging case, and a reverse connection occurs.

In the foregoing two cases of reverse connection, an anti-reverse connection circuit may be disposed in the first earphone and the second earphone in the earphone assembly. The anti-reverse connection circuit is connected in series between the first contact or the second contact and a charging circuit. The anti-reverse connection circuit is configured to: be turned on when the first earphone or the second earphone is correctly connected to the charging case, and be turned off when the first earphone or the second earphone is reversely connected to the charging case, to effectively avoid damage to the next circuits of the first earphone and the second earphone when the first earphone or the second earphone is incorrectly placed in the charging case. The anti-reverse connection circuit may include one or more of devices such as a MOS transistor, a resistor, a capacitor, a diode, and a magnetic bead.

In some possible implementations, in the first earphone, the first earphone includes an anti-reverse connection circuit and a charging circuit, the anti-reverse connection circuit is connected in series between the first contact or the second contact and the charging circuit, and the anti-reverse connection circuit is configured to be turned on when the first contact is in contact with the first electrode and the second contact is in contact with the second electrode, and is further configured to be turned off when the first contact is in contact with the second electrode and the second contact is in contact with the first electrode.

In this implementation, the anti-reverse connection circuit is turned on when the first earphone is correctly connected to the charging case, and is turned off when the first earphone is reversely connected to the charging case, to effectively avoid a case in which the next circuit is damaged when the first earphone is incorrectly placed in the charging case.

The anti-reverse connection circuit may be further turned on or off when the first contact is in contact with the third electrode and the second contact is in contact with the fourth electrode. The anti-reverse connection circuit is turned off when the first contact is in contact with the fourth electrode and the second contact is in contact with the third electrode.

For example, a processor of the first earphone is electrically connected to the anti-reverse connection circuit, and the processor is configured to control a working state of the anti-reverse connection circuit. The processor may send an enable signal to the anti-reverse connection circuit. The enable signal indicates the anti-reverse connection circuit to work.

In some possible implementations, the anti-reverse connection circuit includes an NMOS transistor, a drain of the NMOS transistor is electrically connected to the first contact or the second contact, and a source of the NMOS transistor is electrically connected to the charging circuit. In this implementation, the anti-reverse connection circuit implements, by using the NMOS transistor, a function of being turned on in a case of a correct connection and being turned off in a case of a reverse connection.

In some possible implementations, the first earphone further includes the processor, the processor is electrically connected to a gate of the NMOS transistor, and the processor is configured to control the working state of the anti-reverse connection circuit.

For example, the drain of the NMOS transistor is electrically connected to the second contact, the source of the NMOS transistor is electrically connected to a second port of the charging circuit, and the gate of the NMOS transistor may be electrically connected to the processor. Alternatively, the drain of the NMOS transistor is electrically connected to the first contact, the source of the NMOS transistor is electrically connected to a first port of the charging circuit, and the gate of the NMOS transistor may be electrically connected to the processor. When the first earphone is correctly connected to the charging case, Vgs of the NMOS transistor is greater than Vth, and the NMOS transistor is turned on. When the first earphone is reversely connected to the charging case, Vgs of the NMOS transistor is less than Vth, and the NMOS transistor is turned off.

An equivalent circuit of the NMOS transistor may include a MOS transistor part, a parasitic capacitor, and a body diode that are connected in parallel.

In some possible implementations, the first earphone further includes a first resistor and a second resistor, and the first resistor and the second resistor form a voltage divider circuit. The first resistor and the second resistor are connected in series between the first contact and the second contact, and the gate of the NMOS transistor is electrically connected between the first resistor and the second resistor. When the first earphone is correctly connected to the charging case, a first voltage exists between the first contact and the second contact, and the first resistor and the second resistor perform voltage division, so that a voltage exists at the gate of the NMOS transistor, and the NMOS transistor is turned on.

In some use scenarios, the first earphone is correctly placed in the first earphone slot in the charging case. When in-case presence detection is performed by using the first contact and the second contact, a detection voltage exists between the first contact and the second contact, and the first resistor and the second resistor perform voltage division, so that a voltage exists at the gate of the NMOS transistor, and the NMOS transistor is turned on. When the first earphone communicates with the charging case, if the charging case outputs a signal 1 (a high level), the first resistor and the second resistor perform voltage division, so that a voltage exists at the gate of the NMOS transistor, and the NMOS transistor is turned on; or if the charging case outputs a signal 0 (a low level), the processor outputs the enable signal, so that a voltage exists at the gate of the NMOS transistor, and the NMOS transistor is turned on. When the charging case charges the first earphone, a charging voltage exists between the first contact and the second contact, and the first resistor and the second resistor perform voltage division, so that a voltage exists at the gate of the NMOS transistor, and the NMOS transistor is turned on.

In some possible implementations, the first earphone further includes a first transient voltage suppressor, and two ends of the first transient voltage suppressor are respectively electrically connected to the first contact and the second contact; and/or the first earphone further includes a second transient voltage suppressor, and two ends of the second transient voltage suppressor are respectively electrically connected to the drain and the source of the NMOS transistor.

In this implementation, the transient voltage suppressor is a highly efficient protection device in a form of a diode. The first transient voltage suppressor and the second transient voltage suppressor are disposed to prevent the first earphone from generating static electricity, so as to improve reliability and user experience.

In some possible implementations, the first earphone may further include a diode, a positive electrode of the diode is connected to the processor, and a negative electrode is connected to the gate of the NMOS transistor, to prevent a voltage from flowing back into the processor, and lower a risk that the processor is damaged.

In some possible implementations, the anti-reverse connection circuit includes one NMOS transistor. In this case, the anti-reverse connection circuit includes few parts, has simple logic, is easy to control, and has low costs.

In some possible implementations, the anti-reverse connection circuit includes a plurality of NMOS transistors, and the plurality of NMOS transistors are connected in series or in parallel. When the NMOS transistors are connected in parallel, impedance of the anti-reverse connection circuit may be reduced, and a through current may be increased, to improve charging efficiency. In addition, a risk that the NMOS transistor is damaged can be lowered. When the NMOS transistors are connected in series, reliability of the anti-reverse connection circuit is high, to effectively prevent a risk that the next circuit of the first earphone is damaged when the first earphone is reversely connected to the charging case.

In some possible implementations, the first earphone further includes a third resistor, and two ends of the third resistor are respectively connected to two ports of the charging circuit. The third resistor is configured to implement impedance matching.

In some possible implementations, the anti-reverse connection circuit may further cooperate with software of the earphone, to ensure that when the first earphone and the second earphone are correctly connected to the charging case, normal communication and charging can be performed, and when the first earphone and the second earphone are reversely connected to the charging case, a component such as a charging circuit of the charging case and the next circuit such as the charging circuit of the earphone are protected, so as to improve reliability of the earphone assembly.

In some possible implementations, an anti-reverse connection function is enabled by default for software of the first earphone and the second earphone. That is, the processor sends the enable signal to the anti-reverse connection circuit by default, so that the anti-reverse connection circuit is in the working state. In this case, when the first earphone and the second earphone are correctly connected to the charging case, charging and communication can be implemented; and when the first earphone and the second earphone are reversely connected to the charging case, the next circuits of the first earphone and the second earphone are normal.

In some other possible implementations, an anti-reverse connection function is not enabled by default for software of the first earphone and the second earphone, but the anti-reverse connection function is enabled in some scenarios. For example, the first earphone and the second earphone may determine, based on an in-case/out-case presence detection status, whether to enable the anti-reverse connection function. For example, the first earphone includes an in-case presence detection component (for example, a Hall sensor), the in-case presence detection component is electrically connected to the processor, the in-case presence detection component is configured to detect whether the first earphone is accommodated in the first earphone slot in the charging case, and the processor is configured to control the anti-reverse connection circuit to work when the first earphone is accommodated in the first earphone slot. The first earphone and the second earphone may further determine, based on other status changes of the earphone, including but not limited to changes of status registers such as a sensor and the charging circuit, whether to enable the anti-reverse connection function.

In some possible implementations, in the first earphone, the first earphone includes the processor, the charging circuit, and the in-case presence detection component, the processor is electrically connected to the charging circuit and the in-case presence detection component, the charging circuit is electrically connected to the first contact and the second contact, the in-case presence detection component is configured to detect whether the first earphone is accommodated in the first earphone slot, and the processor is configured to control the charging circuit to work when the first earphone is accommodated in the first earphone slot.

Working states of charging circuits of the first earphone and the second earphone may be controlled, to ensure that when the first earphone and the second earphone are correctly connected to the charging case, normal communication and charging can be performed, and when the first earphone and the second earphone are reversely connected to the charging case, the next circuits are not damaged, so as to improve reliability of the earphone assembly.

In some possible implementations, in the charging case, the charging case further includes a processor and a charging circuit, the charging circuit is electrically connected to the processor, the first electrode, and the second electrode, and the processor is configured to: when the first earphone is accommodated in the first earphone slot, obtain a battery level of the first earphone through the charging circuit, the first electrode, and the second electrode, and when the battery level of the first earphone is less than or equal to a threshold, control the charging circuit to charge the first earphone.

A working mode of the charging circuit includes a communication mode and a charging mode, and the two modes are time-division multiplexed. In some use scenarios, after the charging case is opened, the charging circuit is in the communication mode, and the processor continuously performs polling through the charging circuit, to detect whether the first earphone is placed in the case. After detecting that the first earphone is placed in the case, the processor obtains the battery level of the first earphone through the charging circuit, and determines whether the first earphone needs to be charged. When the battery level of the first earphone is less than or equal to the threshold, the processor determines that the first earphone needs to be charged, and controls the charging circuit to switch to the charging mode and charge the first earphone. After charging is performed for a specific time, the processor controls the charging circuit to switch to the communication mode, reads the battery level of the first earphone again, and determines whether to continue charging the first earphone. This is repeated for one or more times. When the processor determines that the first earphone is fully charged, charging is stopped. When determining that the battery level of the first earphone is sufficient (for example, greater than 90%), or a voltage of the first earphone is sufficient, the processor may control the charging circuit to reduce a charging current.

In this embodiment, a dual-contact solution is used for the first earphone, and a dual-electrode solution is correspondingly used for the charging case. Therefore, in a working process of the assembly of the first earphone, the two contacts of the first earphone and the two electrodes of the charging case are switched between the communication mode and the charging mode.

In some possible implementations, the housing of the first earphone is of an asymmetric structure, the first earphone slot is of an asymmetric structure, and a shape of the first earphone slot is the same as a shape of the housing of the first earphone. Similarly, the housing of the second earphone is of an asymmetric structure, the second earphone slot is of an asymmetric structure, and a shape of the second earphone slot is the same as a shape of the housing of the second earphone. When the first earphone and the second earphone are placed in an incorrect posture in the charging case, the first earphone and the second earphone cannot be placed in place, and a user can be reminded to place the first earphone and the second earphone again, to help improve user experience.

In some possible implementations, in the first earphone, the housing includes a main housing and a front housing, the front housing is fastened on a front side of the main housing, internal space of the front housing communicates with internal space of the main housing, and when the earphone is being worn, the front housing faces a user ear. The main housing includes a first end that is in contact with the front housing and a second end that is far away from the front housing, and in a direction from the first end to the second end of the main housing, an outer contour of the main housing first shrinks and then expands. Both the first contact and the second contact are fastened to the main housing and exposed relative to the main housing.

In this implementation, a shape of the main housing is designed, so that a stem of the earphone can have a shape similar to that of a "freely falling water drop", and an appearance is exquisite.

In some possible implementations, in the first earphone, the main housing includes a main housing member, the main housing member includes a top part, a middle part, and a bottom part that are sequentially connected, the top part of the main housing member is connected to the front housing, and both the first contact and the second contact are fastened to the bottom part of the main housing member. The first earphone slot includes a first bottom slot and a first top slot that are located in a case body of the charging case. When the first earphone is placed in the first earphone slot, the bottom part of the main housing member is located in the first bottom slot, both the front housing and the top part of the main housing member are partially located in the first top slot and partially located outside the case body, and the middle part of the main housing member is located outside the case body.

In this implementation, when the first earphone is placed in the first earphone slot, a large part of the first earphone is exposed relative to the charging case, to help the user take out the earphone and improve user experience. In addition, the two contacts are located at the bottom part of the main housing member, to facilitate smooth contact between the two contacts and the electrodes of the charging case, and ensure reliability of an electrical connection.

### BRIEF DESCRIPTION OF DRAWINGS

FIG. 1A is a rear view of an earphone in some embodiments according to this application;
FIG. 1B is a left view of the earphone shown in FIG. 1A;
FIG. 2 is a diagram of a structure of the earphone shown in FIG. 1A in some use scenarios;
FIG. 3 is a diagram of a partial exploded structure of the earphone shown in FIG. 1A;
FIG. 4 is a diagram of a cross-sectional structure that is of the earphone shown in FIG. 1A and that is taken along A-A;
FIG. 5 is a block diagram of some circuits of the earphone shown in FIG. 1A;
FIG. 6 is a diagram of an exploded structure of a housing shown in FIG. 3;
FIG. 7 is a diagram of an internal structure of a housing shown in FIG. 3;
FIG. 8 is a diagram of a partial structure of the earphone shown in FIG. 1A;
FIG. 9 is a diagram of structures of a first flexible circuit board and some components shown in FIG. 8;
FIG. 10 is a diagram of structures of a second flexible circuit board and some components shown in FIG. 8;
FIG. 11 is a diagram of a partial structure of a main housing member shown in FIG. 6;
FIG. 12 is a diagram of the other partial structure of a main housing member shown in FIG. 6;
FIG. 13 is a diagram of a structure of a first contact of the earphone shown in FIG. 3;
FIG. 14 is a diagram of a partial structure of a sixth assembly of the earphone shown in FIG. 3;
FIG. 15 is a diagram of an internal structure of a partial structure of the earphone shown in FIG. 1A;
FIG. 16 is an enlarged view of a structure at A shown in FIG. 15;
FIG. 17 is an enlarged view of a structure at B shown in FIG. 15;
FIG. 18 is a diagram of a structure of an earphone assembly in some embodiments according to an embodiment of this application;
FIG. 19 is a diagram of a structure of the earphone assembly shown in FIG. 18 in another use state;
FIG. 20A is a diagram of a structure of a charging case of the earphone assembly shown in FIG. 19 in another use state;
FIG. 20B is a diagram of a structure of the charging case shown in FIG. 20A at another angle;
FIG. 21 is a diagram of a partial exploded structure of a charging case shown in FIG. 19;
FIG. 22 is a diagram of a cross-sectional structure of FIG. 20A along C-C;
FIG. 23 is a diagram of a cross-sectional structure of FIG. 20A along D-D;
FIG. 24 is a diagram of a structure of the earphone assembly shown in FIG. 18 at another angle;
FIG. 25 is a diagram of an exploded structure of a partial structure of the charging case shown in FIG. 21;
FIG. 26 is a diagram of a partial structure of the earphone assembly shown in FIG. 18;
FIG. 27A is a diagram of a structure of the earphone assembly shown in FIG. 18 in another use state;
FIG. 27B is a diagram of a partial structure of the earphone assembly shown in FIG. 27A;
FIG. 28A is a diagram of a structure of the earphone assembly shown in FIG. 18 in another use state;
FIG. 28B is a diagram of a partial structure of the earphone assembly shown in FIG. 28A;
FIG. 29A is a diagram of a structure of the earphone assembly shown in FIG. 18 in another use state;
FIG. 29B is a diagram of a partial structure of the earphone assembly shown in FIG. 29A;
FIG. 30 is a diagram of some circuits of the earphone assembly shown in FIG. 18 in some embodiments;
FIG. 31 is a diagram of some circuits of a first earphone shown in FIG. 30 in some other embodiments;
FIG. 32 is a diagram of some circuits of a first earphone shown in FIG. 30 in some other embodiments; and
FIG. 33 is a diagram of some circuits of a first earphone shown in FIG. 30 in some other embodiments.

### DESCRIPTION OF EMBODIMENTS

The following describes technical solutions of embodiments of this application with reference to accompanying drawings. In the descriptions of embodiments of this application, unless otherwise stated, "/" represents "or". For example, A/B may represent A or B. In this specification, "and/or" merely describes an association relationship between associated objects, and represents that three relationships may exist. For example, A and/or B may represent the following three cases: Only A exists, both A and B exist, and only B exists. In addition, in the descriptions of embodiments of this application, "a plurality of" means two or more.

In the following, terms such as "first" and "second" are used only for description purposes, and cannot be understood as an indication or implication of relative importance or an implicit indication of a quantity of indicated technical features. Therefore, a feature limited by "first" or "second" may explicitly or implicitly include one or more features.

The orientation terms such as "front", "rear", "left", "right", "inner", "outer", "side", "top", "bottom", "upper", and "lower" in embodiments of this application are merely directions described with reference to the accompanying drawings. Therefore, the orientation terms are used to better and more clearly describe and understand embodiments of this application, instead of indicating or implying that a specified apparatus or element needs to have a specific orientation, or be constructed and operated in a specific orientation. Therefore, this cannot be understood as a limitation on embodiments of this application.

In the descriptions of embodiments of this application, it should be noted that unless otherwise explicitly specified and limited, the terms "mounted", "connected", "connection", and "disposed on..." should be understood in a broad sense. For example, a "connection" may be a detachable connection, a non-detachable connection, a direct connection, or an indirect connection implemented through an intermediate medium. A "fixed connection" means that two parts are connected to each other and a relative position relationship remains unchanged after the two parts are connected. An "electrical connection" means that an electrical signal may be conducted between each other.

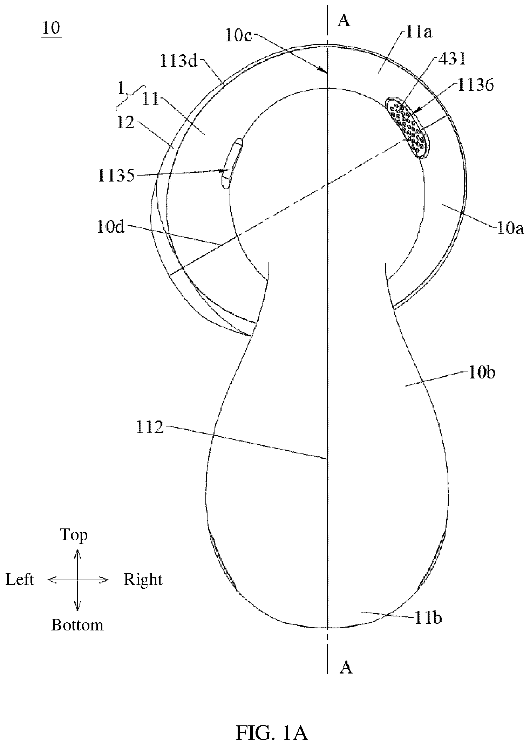

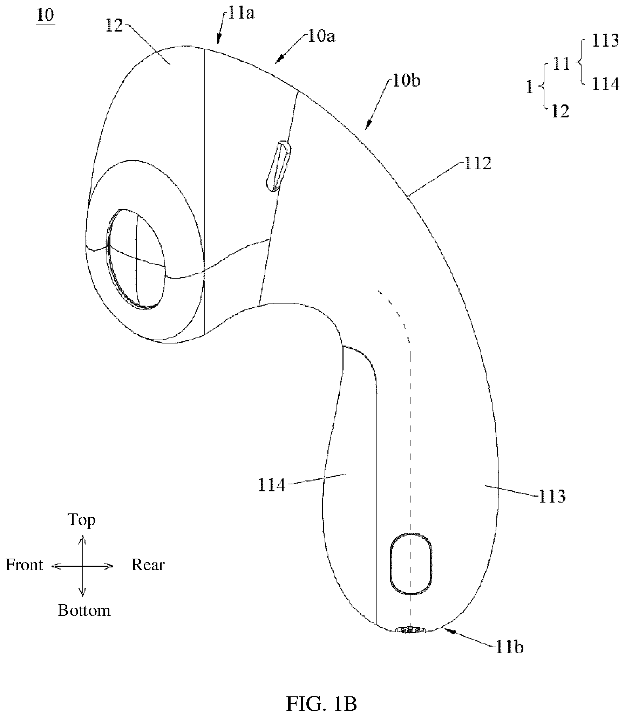

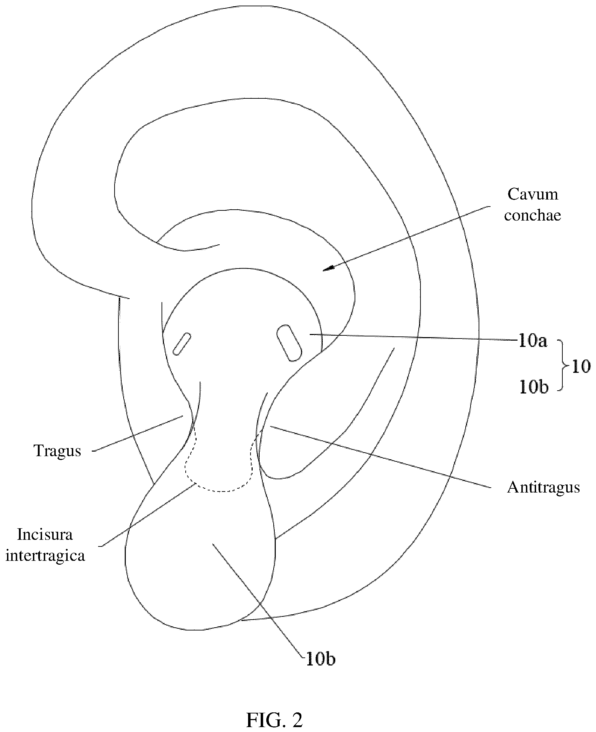

Overall appearance and parting of an earphone:
Refer to FIG. 1A, FIG. 1B, and FIG. 2. FIG. 1A is a rear view of an earphone 10 in some embodiments according to this application, FIG. 1B is a left view of the earphone 10 shown in FIG. 1A, and FIG. 2 is a diagram of a structure of the earphone 10 shown in FIG. 1A in some use scenarios.

This application provides an earphone 10. The earphone 10 is a wireless earphone, for example, may be a TWS (True Wireless Stereo, true wireless stereo) earphone. For ease of description in the following, it is defined as follows: The earphone 10 has relative orientations "top" and "bottom", which correspond to a height direction of the earphone 10; the earphone 10 has relative orientations "left" and "right", which correspond to a width direction of the earphone 10; and the earphone 10 has relative orientations "front" and "rear", which correspond to a thickness direction of the earphone 10. In descriptions of some embodiments, an orientation "upper" corresponds to the orientation "top", and an orientation "lower" corresponds to the orientation "bottom".

The earphone 10 includes an earbud 10a and a stem 10b. The stem 10b may also be referred to as a handle, and a top part of the stem 10b is connected to a rear side of the earbud 10a. An outer surface of the earphone 10 is a geometric curved surface that implements a smooth transition. In a direction from an end connected to the earbud 10a to an end that is far away from the earbud 10a, an outer contour of the stem 10b is in a form of first shrinking, then expanding, and then shrinking, and the stem 10b is as round and natural as a freely falling water drop. For example, the earphone 10 may have a central surface 10c, and a central axis 10d of the earbud 10a may be inclined to the central surface 10c. When the earphone 10 is used as a left earphone, a bottom end of the central axis 10d of the earbud 10a may be deflected to the left relative to the central surface 10c, and a top end of the central axis 10d of the earbud 10a may be deflected to the right relative to the central surface 10c. When the earphone 10 is used as a right earphone, a bottom end of the central axis 10d of the earbud 10a may be deflected to the right relative to the central surface 10c, and a top end of the central axis 10d of the earbud 10a may be deflected to the left relative to the central surface 10c. For example, the outer contour of the stem 10b may be symmetrically disposed relative to the central surface 10c.

When the earphone 10 is worn on an ear of a consumer, a front side of the earphone 10 faces the ear, and a rear side of the earphone 10 faces away from the ear. The front side of the earphone 10 is mostly an invisible region, and the rear side of the earphone 10 is mostly a visible region. The earbud 10a of the earphone 10 is inserted into the cavum conchae of the ear, the top part of the stem 10b is located in the cavum conchae, and a bottom part of the stem 10b is located outside the cavum conchae. The tragus, incisura intertragica, and antitragus of the ear may just surround a shrinking part of the stem 10b, to clamp the shrinking part of the stem 10b, so that wearing stability of the earphone 10 is improved, and wearing comfort can be considered, to improve user experience.

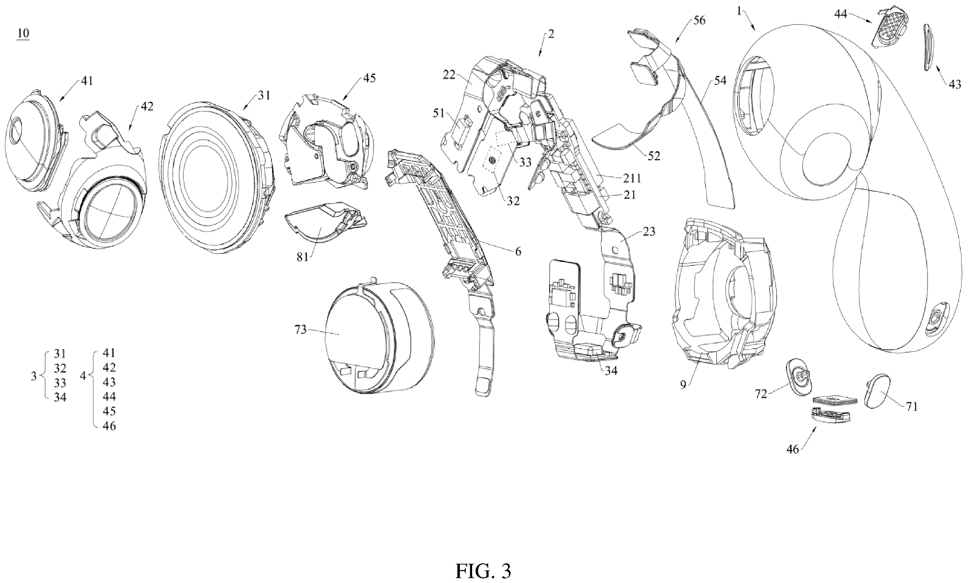

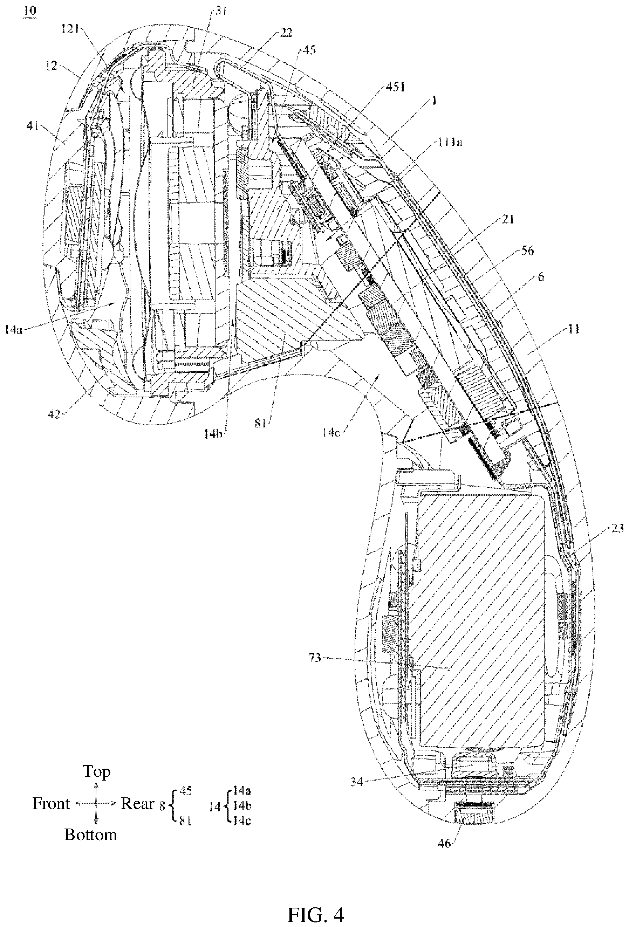

Refer to FIG. 3 and FIG. 4. FIG. 3 is a diagram of a partial exploded structure of the earphone 10 shown in FIG. 1A, and FIG. 4 is a diagram of a cross-sectional structure that is of the earphone 10 shown in FIG. 1A and that is taken along A-A. A-A corresponds to the central surface 10c of the earphone 10.

In some embodiments, the earphone 10 includes a housing 1 and a plurality of assemblies mounted in the housing 1. The plurality of assemblies include but are not limited to a circuit assembly 2, an audio assembly 3, an audio auxiliary assembly 4, a detection assembly 5, an antenna 6, a first contact 71, a second contact 72, a battery 73, and a magnetic attraction member 81.

For example, the circuit assembly 2 may include a main circuit board 21, a first flexible circuit board 22, and a second flexible circuit board 23. A plurality of components may be fastened on each circuit board. For example, a main control chip 211 may be arranged on the main circuit board 21, and the main control chip 211 may be a system on chip (System on Chip, SoC). A plurality of circuits may be integrated into the main control chip 211. One end of the first flexible circuit board 22 is electrically connected to the main circuit board 21, and one end of the second flexible circuit board 23 is electrically connected to the main circuit board 21, to implement electrical connections between components on the circuit boards. The circuit assembly 2 is electrically connected to another functional component, module, and the like of the earphone 10.

For example, the audio assembly 3 may include a speaker 31 and a plurality of microphones, to implement sound playing and sound pickup. The speaker 31 may also be referred to as a "horn", and is configured to convert an audio electrical signal into a sound signal. The microphone is configured to convert a sound signal into an electrical signal, and is mainly configured to: collect a sound outside the earphone 10, convert the sound into an electrical signal, and transmit the electrical signal to the main control chip 211 for processing, to implement functions such as active noise reduction, a voice call, call noise reduction, an ambient sound mode, and voice assistant wakeup of the earphone 10.

The plurality of microphones may include a first microphone 32, a second microphone 33, and a third microphone 34. In this application, the first microphone 32 and the second microphone 33 in the audio assembly 3 of the earphone 10 are used in an active noise cancelling (Active Noise Cancelling, ANC) design system. Active noise cancelling is a method for identifying an unwanted sound source as noise, and a design of eliminating original noise by generating an "anti-noise" signal, to eliminate noise in real time. The second microphone 33 may be an FF (Feedforward topology, feedforward topology) microphone. The FF microphone is a reference microphone facing an outside of a user ear, and is configured to sense a main noise signal that may be used as a reference signal of a forward active noise cancelling filter. The first microphone 32 may be an FB (Feedback Topology, feedback topology) microphone. The FB microphone is an error microphone, and is configured to collect, as a reference signal of a feedback active noise cancelling filter, a signal entering the user ear. The third microphone 34 may be a call microphone.

For example, the audio auxiliary assembly 4 is configured to provide a plurality of channels, to assist the audio assembly 3 in implementing sound playing, sound pickup, and the like. The audio auxiliary assembly 4 may include a first assembly 41, a second assembly 42, a third assembly 43, a fourth assembly 44, a fifth assembly 45, and a sixth assembly 46. The plurality of assemblies are mounted at different positions of the housing 1, and are configured to provide corresponding channels for a plurality of parts in the audio assembly 3.

For example, the detection assembly 5 includes a plurality of sensors. The plurality of sensors may include a proximity sensor 51, a wearing detection sensor 52, a Hall sensor (Hall sensor) (not shown in the figure), a touch sensor 54, a gravity sensor (g-sensor) (not shown in the figure), and the like. The proximity sensor 51 and the wearing detection sensor 52 are configured to implement wearing detection of the earphone 10. The Hall sensor is configured to implement in-case presence detection of the earphone 10. The touch sensor 54 is configured to detect a touch action of a user. The gravity sensor is configured to detect a posture change of the earphone 10. The touch sensor 54 and the gravity sensor are configured to improve man-machine interaction experience of the earphone 10. The wearing detection sensor 52 and the touch sensor 54 may be capacitive sensors (cap sensors). The detection assembly 5 may include a detection circuit board 56. The detection circuit board 56 forms the wearing detection sensor 52 and the touch sensor 54.

In some use scenarios, the earphone 10 may determine, by using a wearing detection function, whether the user wears/takes off the earphone 10, to automatically play/pause music. In some other use scenarios, if the user takes off the earphone 10, does not wear the earphone 10 for a long time, and does not put the earphone 10 back into a charging case, the earphone 10 automatically sleeps/powers off, to save power. In some other use scenarios, to improve experience of single/dual-ear use of the earphone 10, when two earphones 10 are worn, both the two earphones 10 play music, and when one earphone 10 is taken off and the other earphone 10 is worn, the earphone 10 that is not being worn stops playing music, and the earphone 10 that is being worn continues to play, to implement seamless switching.

In some use scenarios, the earphone 10 may detect different touch actions or operation actions of the user by using a man-machine interaction function, to implement functions such as music playing/pause, music switching, volume adjustment, and intelligent voice wakeup of the earphone 10. In this way, during use, the earphone 10 may be disconnected, to some extent, from a terminal (a mobile phone, a tablet, or the like) connected to the earphone 10, and an operation is more convenient and quick, to help improve user experience.

For example, the antenna 6 is configured to implement wireless communication between the earphone 10 and another terminal (for example, a mobile phone, a tablet, or the like). The battery 73 is configured to supply power to the earphone 10. The first contact 71 and the second contact 72 are configured to: when the earphone 10 is placed in the case, implement communication with the charging case, and implement a process of charging the earphone 10 by the charging case. The magnetic attraction member 81 is configured to form magnetic attraction force with the charging case when the earphone 10 is accommodated in the charging case, so that the earphone 10 is stably placed in the charging case.

In some other embodiments of this application, the earphone 10 may include more or fewer parts than those in the foregoing embodiment, some parts may be combined, some parts may be split, or different part arrangements may be used. The parts of the earphone 10 may be implemented by hardware, software, or a combination of software and hardware.

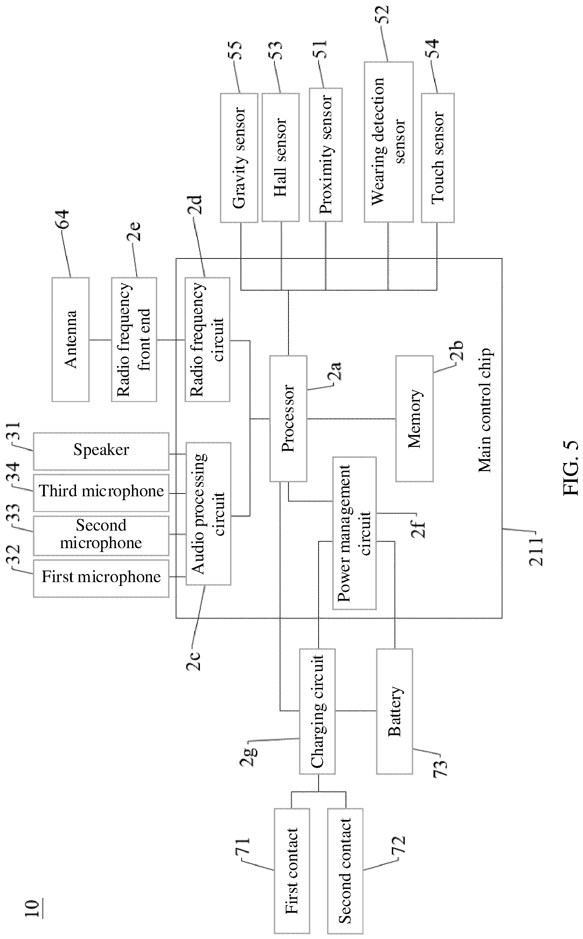

Refer to FIG. 5. FIG. 5 is a block diagram of some circuits of the earphone 10 shown in FIG. 1A.

In some embodiments, the earphone 10 may include a processor 2a, a memory 2b, an audio processing circuit 2c, a radio frequency circuit 2d, a radio frequency front end 2e, a power management circuit 2f, a charging circuit 2g, and the like. The processor 2a is electrically connected to the memory 2b.

All of the speaker 31, the first microphone 32, the second microphone 33, and the third microphone 34 are electrically connected to the audio processing circuit 2c, and the audio processing circuit 2c is electrically connected to the processor 2a. The audio processing circuit 2c is configured to convert digital audio information into an analog audio signal for output, and is further configured to convert an analog audio input into a digital audio signal. The audio processing circuit 2c may be further configured to encode and decode an audio signal. In some embodiments, the audio processing circuit 2c may alternatively be disposed in the processor 2a, or some functional modules of the audio processing circuit 2c are disposed in the processor 2a.

The antenna 6 is connected to the radio frequency front end 2e, the radio frequency front end 2e is connected to the radio frequency circuit 2d, and the radio frequency circuit 2d is connected to the processor 2a. The radio frequency circuit 2d is configured to modulate a radio frequency signal or demodulate a radio frequency signal. The radio frequency front end 2e is configured to filter and amplify the radio frequency signal. The radio frequency front end 2e may include one or more of a power amplifier (Power Amplifier, PA), a filter, a switch (Switch), and a low noise amplifier (LNA, Low Noise Amplifier). The filter may be a surface acoustic wave (surface acoustic wave, SAW) filter.

The first contact 71 and the second contact 72 are electrically connected to the charging circuit 2g, and the charging circuit 2g is electrically connected to the processor 2a, the power management circuit 2f, and the battery 73. The charging circuit 2g is configured to receive a charging input through the first contact 71 and the second contact 72. The power management circuit 2f is electrically connected to the processor 2a. The power management circuit 2f receives an input from the battery 73 and/or the charging circuit 2g, and supplies power to the processor 2a, the memory 2b, and other parts. In some other embodiments, the power management circuit 2f may alternatively be disposed in the processor 2a. In some other embodiments, the power management circuit 2f and the charging circuit 2g may alternatively be disposed in a same component.

All of the proximity sensor 51, the wearing detection sensor 52, the Hall sensor 53, the touch sensor 54, and the gravity sensor 55 are electrically connected to the processor 2a.

The processor 2a, the memory 2b, the audio processing circuit 2c, the radio frequency circuit 2d, and the power management circuit 2f may be integrated into the main control chip 211. The radio frequency front end 2e and the charging circuit 2g may be respectively formed in other chips. In some other embodiments, the foregoing circuit may have another implementation structure. For example, more or fewer circuits may be integrated into the main control chip 211. For example, the radio frequency circuit 2d may be independent of the main control chip 211 and implemented by a radio frequency chip. This is not strictly limited in this embodiment of this application.

The following describes the parts/components of the earphone 10 by using examples.

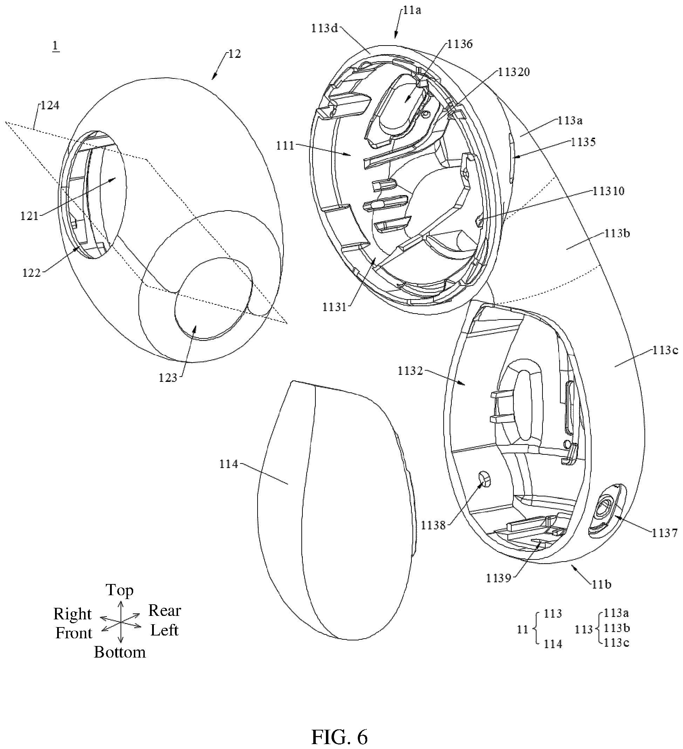

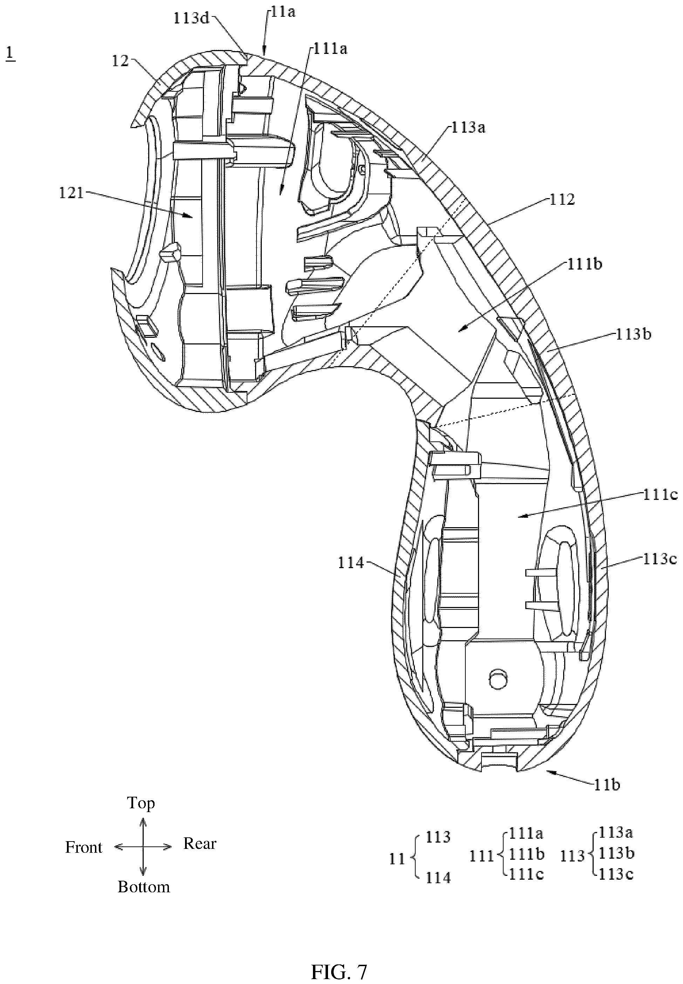

Housing 1 of the earphone 10:
Refer to FIG. 1A, FIG. 1B, FIG. 6, and FIG. 7. FIG. 6 is a diagram of an exploded structure of the housing 1 shown in FIG. 3, and FIG. 7 is a diagram of an internal structure of the housing 1 shown in FIG. 3.

In some embodiments, the housing 1 includes a main housing 11 and a front housing 12, the front housing 12 is fastened on a front side of the main housing 11, and internal space 121 of the front housing 12 communicates with internal space 111 of the main housing 11. When the earphone 10 is being worn, the front housing 12 faces a user ear. Specifically, the front housing 12 may be located in the cavum conchae, be in contact with the cavum conchae, and face an ear canal of the user ear. The front housing 12 and a partial structure that is of the main housing 11 and that is connected to the front housing 12 form a housing of the earbud 10a of the earphone 10, and the other partial structure of the main housing 11 forms a housing of the stem 10b of the earphone 10.

The main housing 11 includes a first end 11a and a second end 11b. The first end 11a of the main housing 11 is close to the front housing 12, and is in contact with the front housing 12, and the second end 11b of the main housing 11 is far away from the front housing 12. The main housing 11 has a dorsal line 112, and the dorsal line 112 extends from the first end 11a of the main housing 11 to the second end 11b of the main housing 11. The dorsal line 112 is located on a rear side of the main housing 11, and the dorsal line 112 is located on the central surface 10c of the earphone 10. The dorsal line 112 is a smooth curve. As shown in FIG. 1B, when the earphone 10 is in a left view, a contour line of a side (that is, a side facing away from the front housing 12) that is of the main housing 11 and that faces backward corresponds to the dorsal line 112. The dorsal line 112 may be a solid line, or may be a non-solid line. This is not strictly limited in this embodiment of this application.

For example, in a direction from the first end 11a of the main housing 11 to the second end 11b of the main housing 11, an outer contour of the main housing 11 first shrinks and then expands. A case in which the outer contour of the main housing 11 first shrinks and then expands includes a first case in which the outer contour of the main housing 11 first shrinks, then expands, and then shrinks, and a second case in which the outer contour of the main housing 11 first shrinks and then expands.

For the first case, in the direction from the first end 11a of the main housing 11 to the second end 11b of the main housing 11, a part that is of the main housing 11 and that is located on the earbud 10a is in a shrinking form, and a part that is of the main housing 11 and that is located on the stem 10b is in a form of first shrinking, then expanding, and then shrinking, and at a bottom part of the main housing 11, a bottom end face may be formed by an arc-shaped surface or an approximately arc-shaped surface, to have a rounded form. In this case, a shape of the main housing 11 is designed, so that the stem 10b of the earphone 10 can have a shape similar to that of a "freely falling water drop".

For the second case, in the direction from the first end 11a of the main housing 11 to the second end 11b of the main housing 11, a part that is of the main housing 11 and that is located on the earbud 10a is in a shrinking form, and a part that is of the main housing 11 and that is located on the stem 10b first shrinks and then expands, that is, at a bottom part of the main housing 11, a bottom end face may be formed by a plane or an approximate plane. In the second case, a small rounded transition region connected to the bottom end face may exist at the bottom part of the main housing 11, and a form change of this part of transition region is small and may be ignored.

For example, as shown in FIG. 7, the internal space 111 of the main housing 11 includes top space 111a, middle space 111b, and bottom space 111c that sequentially communicate with each other, the top space 111a of the main housing 11 is close to the first end 11a of the main housing 11, and the bottom space 111c of the main housing 11 is close to the second end 11b of the main housing 11. The top space 111a of the main housing 11 is connected to the internal space 121 of the front housing 12. In the direction from the first end 11a of the main housing 11 to the second end 11b of the main housing 11, the internal space 111 of the main housing 11 first shrinks and then expands. A cross-sectional area of the top space 111a of the main housing 11 is basically greater than a cross-sectional area of the middle space 111b of the main housing 11, and a cross-sectional area of the bottom space 111c of the main housing 11 is basically greater than the cross-sectional area of the middle space 111b of the main housing 11. That is, a narrowest position in the internal space 111 of the main housing 11 is located in the middle space 111b of the main housing 11. In this embodiment, the main housing 11 is of a housing member structure, and a form change of the internal space 111 of the main housing 11 is the same as or similar to a form change of the outer contour of the main housing 11.

It may be understood that in the accompanying drawings of this embodiment of this application, division positions of the top space 111a, the middle space 111b, and the bottom space 111c of the main housing 11 are example positions, and are not strict and unique position division. In an overall design of the earphone 10, a requirement that the internal space 111 of the main housing 11 shrinks to the narrowest in the middle space 111b needs to be met, and the division positions of the top space 111a, the middle space 111b, and the bottom space 111c of the main housing 11 may be adaptively changed based on an actual situation.

For example, when the dorsal line 112 extends from the first end 11a of the main housing 11 to the second end 11b of the main housing 11, the dorsal line 112 first extends backward and then extends forward. A part that is of the main housing 11 and that corresponds to a line segment that extends backward and that is of the dorsal line 112 is in a form of first shrinking and then expanding. A part that is of the main housing 11 and that corresponds to a line segment that extends forward and that is of the dorsal line 112 is in a shrinking form. In this embodiment, a shape of the dorsal line 112 is set, so that a back of the earphone 10 is in a form that implements free sliding, and an overall form of the earphone 10 is natural and beautiful.

The dorsal line 112 may include a plurality of smoothly connected arc-shaped line segments. In an extension direction of the dorsal line 112, radii of the plurality of arc-shaped line segments first increase and then decrease. An arc-shaped line segment with a largest radius may be disposed to correspond to the middle space 111b of the main housing 11.

In some embodiments, as shown in FIG. 1B, FIG. 6, and FIG. 7, the main housing 11 includes a main housing member 113 and a sealing cover member 114. The main housing member 113 has a first opening 1131 and a second opening 1132 that are disposed at an interval, and both the first opening 1131 and the second opening 1132 are disposed to face forward. That is, when the earphone 10 is being worn, both the first opening 1131 and the second opening 1132 face the user ear. The main housing member 113 includes a top part 113a, a middle part 113b, and a bottom part 113c that are sequentially connected. The first opening 1131 is formed at the top part 113a of the main housing member 113, and the second opening 1132 is formed at the bottom part 113c of the main housing member 113. The front housing 12 is mounted at the first opening 1131, the sealing cover member 114 is mounted at the second opening 1132, and the sealing cover member 114 is located on a front side of the bottom part 113c of the main housing member 113. As shown in FIG. 7, inner side space of the top part 113a of the main housing member 113 forms the top space 111a of the main housing 11, inner side space of the middle part 113b of the main housing member 113 forms the middle space 111b of the main housing 11, and the sealing cover member 114 and a part (that is, the bottom part 113c of the main housing member 113) of the main housing member 113 jointly enclose the bottom space 111c of the main housing 11. The main housing member 113 may be an integrally formed structural member. For example, the main housing member 113 may be formed by using an injection molding process.

In this embodiment, the housing 1 mainly includes three housing members: the front housing 12, the main housing member 113, and the sealing cover member 114. The housing 1 includes such a few housing members that require no complex structure and are easy to assemble. In addition, the middle part 113b of the main housing member 113 is of a complete housing member structure, and no opening is disposed. This helps improve structural strength of the main housing member 113, so that overall structural strength of the main housing 11 and the housing 1 is high.

For example, with reference to FIG. 1A, FIG. 6, and FIG. 7, the main housing 11 includes an abutting end face 113d, the abutting end face 113d is located on the main housing member 113 and is disposed around the first opening 1131, and the abutting end face 113d is in contact with the front housing 12. A plane on which the abutting end face 113d is located is perpendicular to the central surface 10c of the earphone 10. The main housing member 113 has a first projection on the plane on which the abutting end face 113d is located, the sealing cover member 114 has a second projection on the plane on which the abutting end face 113d is located, and the first projection covers the second projection.

A surface of the earphone 10 in a rear view is a primary appearance surface, that is, in a case of viewing from back to front, an exposed surface of the earphone 10 is the primary appearance surface. A surface of the earphone 10 in a front view is a secondary appearance surface, that is, in a case of viewing from front to back, an exposed surface of the earphone 10 is the primary appearance surface. When the earphone 10 is being worn, the secondary appearance surface faces the user ear and is hidden, and the primary appearance surface faces away from the user ear and is exposed. The main housing member 113 is projected from back to front to form the first projection, and the sealing cover member 114 is projected from back to front to form the second projection. The first projection covers the second projection. Therefore, in the rear view of the earphone 10, the main housing member 113 blocks the sealing cover member 114, and a parting line between the sealing cover member 114 and the main housing member 113 is hidden on the secondary appearance surface of the earphone 10, so that the primary appearance surface of the earphone 10 is complete, to maintain good visual integrity. The parting line between the sealing cover member 114 and the main housing member 113 is a line formed on the appearance surface of the earphone 10 at a junction of the sealing cover member 114 and the main housing member 113. A maximum contour line of the main housing member 113 in a left-right direction is shown by a dashed line in FIG. 1B, and the parting line between the sealing cover member 114 and the main housing member 113 is located on a front side of the maximum contour line.

In some embodiments, an overall height of the earphone 10 may range from 35 mm to 45 mm, for example, 38 mm, 39.56 mm, 41.5 mm, 43.21 mm, or the like. An overall width of the earphone 10 may range from 19 mm to 26 mm, for example, 21 mm, 22.83 mm, 24.5 mm, or the like. An overall height of the main housing member 113 may range from 35 mm to 45 mm, for example, 37 mm, 39.38 mm, 41.2 mm, 42.8 mm, or the like. A thickness at a thickest position of the bottom part 113c of the main housing member 113 may range from 8 mm to 12 mm, for example, 8.2 mm, 9 mm, 9.74 mm, 10.11 mm, 10.53 mm, or the like. A width at a widest position of the bottom part 113c of the main housing member 113 may range from 11 mm to 16 mm, for example, 12 mm, 12.8 mm, 13.53 mm, 14.2 mm, or the like. A thickness at a narrowest position of the main housing member 113 in a front-rear direction may range from 6 mm to 8.5 mm, for example, 6.5 mm, 7.2 mm, 7.4 mm, or the like. A width at a narrowest position of the main housing member 113 in the left-right direction ranges from 5 mm to 8.5 mm, for example, 6.47 mm or the like. A spacing between the sealing cover member 114 and the front housing 12 may range from 5 mm to 8 mm, for example, 5.7 mm, 6 mm, 6.54 mm, 7.12 mm, or the like. An included angle between the central axis 10d of the earbud 10a and the central surface 10c may range from 50° to 70°, for example, 55°, 60°, 67°, or the like. An included angle between the abutting end face 113d of the main housing member 113 and a boundary line between the earbud 10a and the stem 10b may range from 7° to 10°, for example, 7.6°, 8.4°, 9.2°, or the like. In some other embodiments, one or more of the foregoing dimensions of the earphone 10 may be adjusted as required.

It may be understood that the foregoing descriptions of the structure of the housing 1 are merely example descriptions. In some other embodiments, the housing 1 may alternatively have another structure. This is not strictly limited in this application.

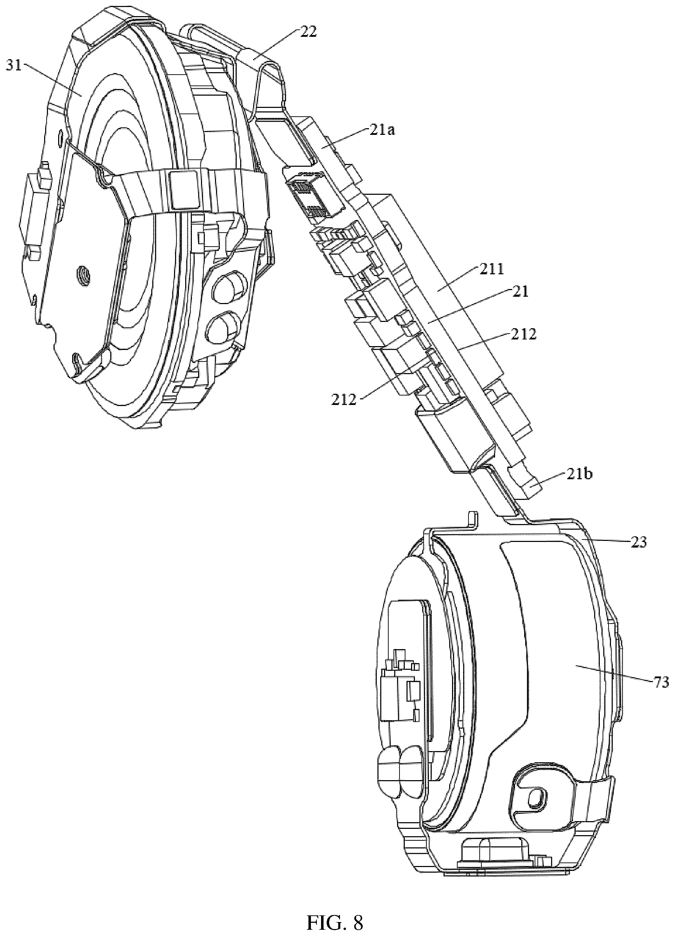

Circuit assembly 2 of the earphone 10:
Refer to FIG. 3 and FIG. 8. FIG. 8 is a diagram of a partial structure of the earphone 10 shown in FIG. 1A.

In some embodiments, the main circuit board 21 includes a first end 21a and a second end 21b that are opposite to each other. The first end 21a of the main circuit board 21 is close to the speaker 31, and the second end 21b of the main circuit board 21 is close to the battery 73. The first flexible circuit board 22 and the speaker 31 are located on a same side of the main circuit board 21, and the first flexible circuit board 22 is electrically connected to the speaker 31 and the first end 21a of the main circuit board 21. The second flexible circuit board 23 and the battery 73 are located on a same side of the main circuit board 21, and the second flexible circuit board 23 is electrically connected to the battery 73 and the second end 21b of the main circuit board 21.

In this embodiment, the main circuit board 21 is a rigid printed circuit board, to have sufficient structural strength, so that a large quantity of components can be arranged on a component arrangement plane, and component arrangement can be implemented on two sides, to improve component integration. The first flexible circuit board 22 and the second flexible circuit board 23 may be bent, and the first flexible circuit board 22 and the second flexible circuit board 23 may be flexibly arranged based on an internal space shape of the earphone 10 and a structure of another part, so that a circuit in the circuit assembly 2 can smoothly extend outward from the main circuit board 21, and is electrically connected to another part (for example, the speaker 31 and the battery 73) of the earphone 10.

The first flexible circuit board 22 may be wound from a rear side of the speaker 31 to a front side of the speaker 31, and a plurality of parts of the first flexible circuit board 22 at different positions may be connected to different components, to improve component integration of the earphone 10. The second flexible circuit board 23 partially surrounds the battery 73, and a plurality of parts of the second flexible circuit board 23 at different positions may be connected to different components, to improve component integration of the earphone 10.

For example, the main circuit board 21 is fixedly connected to the first flexible circuit board 22 by using a BOF (Board on FPC) process, and the main circuit board 21 is fixedly connected to the second flexible circuit board 23 by using the BOF process. The BOF process means a process in which the main circuit board 21 is directly mounted on an FPC. In this embodiment, a bilateral BOF process is used for the electrical connections between the main circuit board 21 and both the first flexible circuit board 22 and the second flexible circuit board 23. This can effectively save component arrangement space of the main circuit board 21 and internal stacking space of the earphone 10, to help reduce costs.

In some other embodiments, the electrical connections between the main circuit board 21 and both the first flexible circuit board 22 and the second flexible circuit board 23 may have other implementations. For example, the electrical connections may be implemented by using a board-to-board (Board-to-board, BTB) connector or a zero insertion force (Zero Insertion Force, ZIF) connector, or the electrical connections may be implemented by using a rigid-flex board solution.

As shown in FIG. 8, for example, both of two board surfaces that are of the main circuit board 21 and that are disposed opposite to each other are component arrangement planes 212, and component arrangement is implemented on the main circuit board 21 on two sides, to fully use board surface space and improve utilization of internal space of the earphone 10. In this embodiment, the main circuit board 21 is of a single-board structure. In some other embodiments, the main circuit board 21 may alternatively be of a multi-board structure, for example, a sandwich structure (that is, a circuit board-component-circuit board structure). This is not strictly limited in this embodiment of this application.

For example, in addition to the main control chip 211, other components, for example, the gravity sensor, the Hall sensor, the radio frequency front end, and the like, of the earphone 10 may be further arranged on the main circuit board 21. A specific component arranged on the main circuit board 21 is not strictly limited in this application.

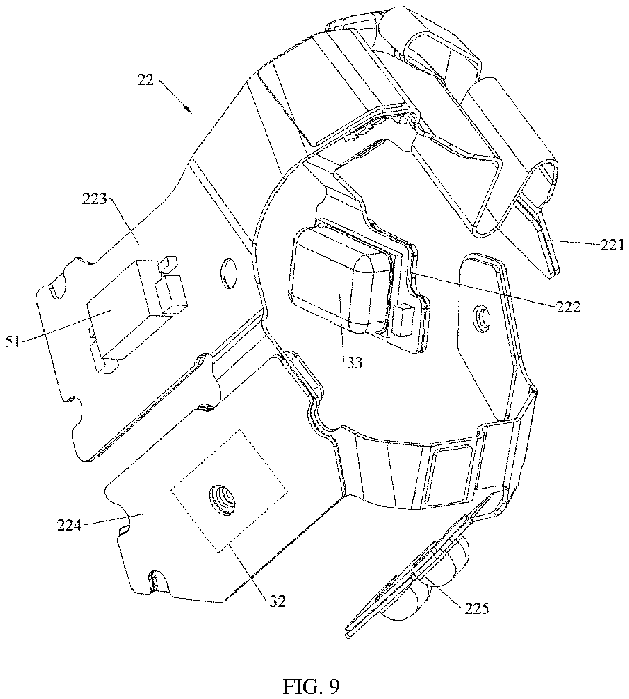

Refer to FIG. 9. FIG. 9 is a diagram of structures of the first flexible circuit board 22 and some components shown in FIG. 8.

In some embodiments, the first flexible circuit board 22 includes an interface part 221 and a plurality of connection parts. The plurality of connection parts may have a plurality of arrangement manners and connection structures. All of the plurality of connection parts are electrically connected to the interface part 221, and the interface part 221 is configured to be electrically connected to the main circuit board 21. The plurality of connection parts may include a first part 222, a second part 223, a third part 224, and a fourth part 225. For example, the second microphone 33 is fastened and electrically connected to the first part 222, and the first part 222 may be further fastened and electrically connected to a fitting component of the second microphone 33. The proximity sensor 51 is electrically connected to the second part 223, and the second part 223 may be further fastened and electrically connected to a fitting component of the proximity sensor 51. The first microphone 32 is fastened and electrically connected to the third part 224, and the third part 224 may be further fastened and electrically connected to a fitting component of the first microphone 32. The fourth part 225 is configured to be electrically connected to the speaker 31. One/Some parts of the first flexible circuit board 22 may be further configured to implement fastening to another part, so that a mounting position of the first flexible circuit board 22 in the earphone 10 is stable and reliable. One/Some parts of the first flexible circuit board 22 may be further used to arrange another circuit component. A stiffener may be disposed at a part that is of the first flexible circuit board 22 and that is used to fasten a component, to increase support strength and improve reliability.

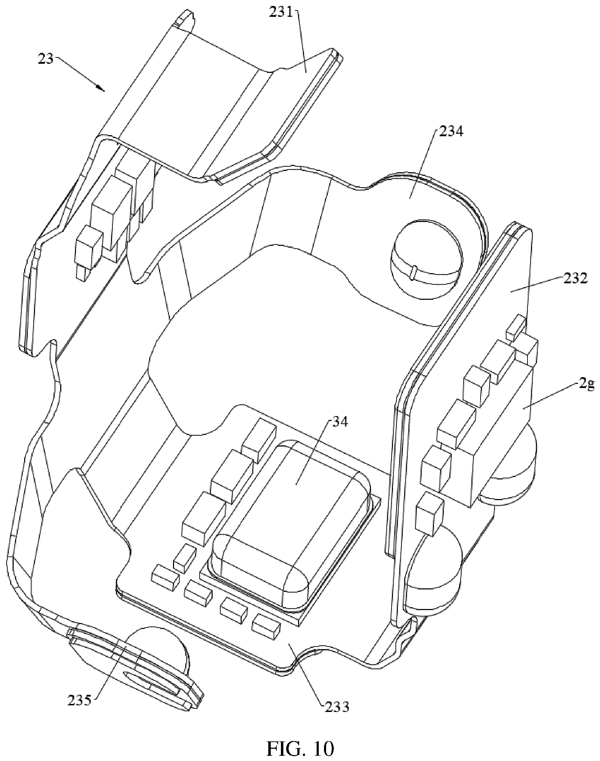

Refer to FIG. 10. FIG. 10 is a diagram of structures of the second flexible circuit board 23 and some components shown in FIG. 8.

In some embodiments, the second flexible circuit board 23 includes an interface part 231 and a plurality of connection parts. The plurality of connection parts may have a plurality of arrangement manners and connection structures. All of the plurality of connection parts are electrically connected to the interface part 231, and the interface part 231 is configured to be electrically connected to the main circuit board 21. The plurality of connection parts may include a first part 232, a second part 233, a third part 234, and a fourth part 235. For example, the first part 232 is configured to be electrically connected to the battery 73, and the charging circuit 2g and a fitting component thereof may be further fastened to the first part 232. The third microphone 34 is electrically connected to the second part 233, and the second part 233 may be further fastened and electrically connected to a fitting component of the third microphone 34. The third part 234 and the fourth part 235 may be respectively configured to be connected to the first contact 71 and the second contact 72. This part of content is described below. One/Some parts of the second flexible circuit board 23 may be further configured to implement fastening to another part, so that a mounting position of the second flexible circuit board 23 in the earphone 10 is stable and reliable. One/Some parts of the second flexible circuit board 23 may be further used to arrange another circuit component. A stiffener may be disposed at a part that is of the second flexible circuit board 23 and that is used to fasten a component, to increase support strength and improve reliability.

Main housing member 113, first contact 71, second contact 72, sixth assembly 46 in the audio auxiliary assembly 4, and third microphone 34 of the earphone 10:

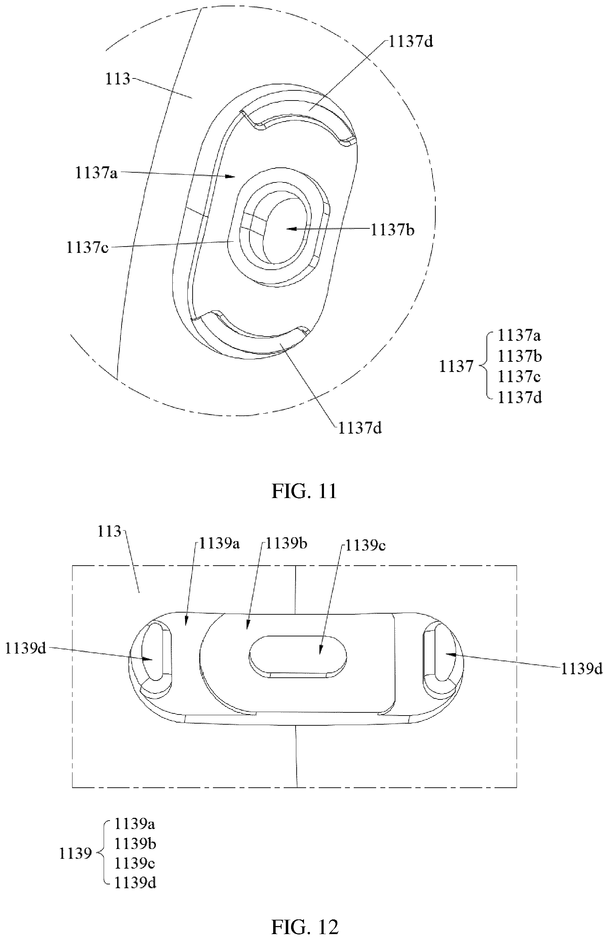

Refer to FIG. 6, FIG. 11, and FIG. 12. FIG. 11 is a diagram of a partial structure of the main housing member 113 shown in FIG. 6, and FIG. 12 is a diagram of the other partial structure of the main housing member 113 shown in FIG. 6.

In some embodiments, the main housing member 113 of the main housing 11 further has a first mounting groove 1137, a second mounting groove 1138, and a third mounting groove 1139. The third mounting groove 1139 is located at the bottom part 113c of the main housing member 113, and may be located at a middle position or close to a middle position. The first mounting groove 1137 and the second mounting groove 1138 are located at the bottom part 113c of the main housing member 113, and are respectively located on two sides of the third mounting groove 1139. The first mounting groove 1137 and the second mounting groove 1138 may be symmetrically disposed relative to the central surface 10c of the earphone 10.

As shown in FIG. 11, for example, the first mounting groove 1137 may include a recessed portion 1137a and a communication portion 1137b. An opening of the recessed portion 1137a is located on the outer surface of the main housing member 113. The communication portion 1137b communicates with the recessed portion 1137a and inner side space of the main housing member 113. A shape of the recessed portion 1137a may be approximately a round waist shape (which may also be referred to as a runway shape). A first protrusion 1137c and a second protrusion 1137d may be disposed on a bottom wall of the recessed portion 1137a. The first protrusion 1137c is disposed around the communication portion 1137b. The second protrusion 1137d and the first protrusion 1137c are disposed at an interval. There may be two second protrusions 1137d, and the two second protrusions 1137d are respectively located on two sides of the first protrusion 1137c. A shape of the second mounting groove 1138 may be the same as a shape of the first mounting groove 1137. Details are not described herein.

As shown in FIG. 12, the third mounting groove 1139 may be provided with a first recessed portion 1139a, a second recessed portion 1139b, and a communication portion 1139c that sequentially communicate with each other. A shape of the first recessed portion 1139a may be approximately a round waist shape (which may also be referred to as a runway shape). The third mounting groove 1139 may be further provided with two third recessed portions 1139d, and both the two third recessed portions 1139d communicate with the first recessed portion 1139a, and are respectively located on two sides of the first recessed portion 1139a.

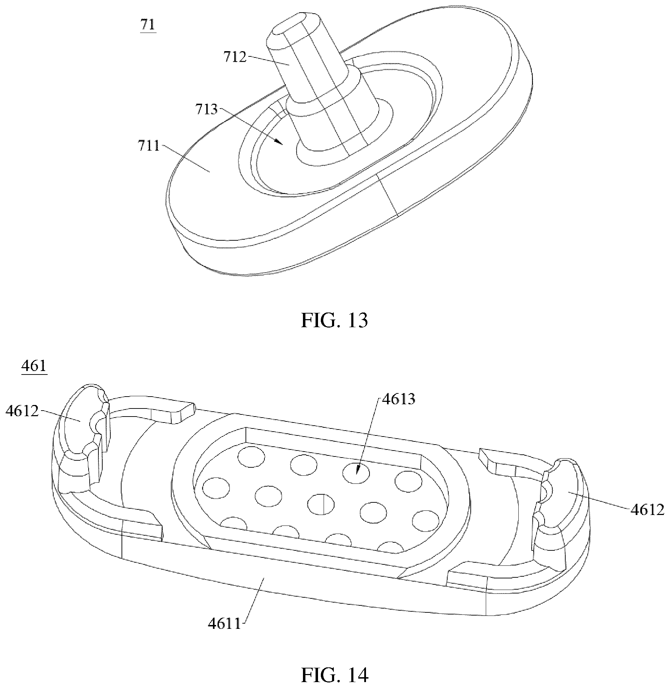

Refer to FIG. 13. FIG. 13 is a diagram of a structure of the first contact 71 of the earphone 10 shown in FIG. 3.

In some embodiments, the first contact 71 includes a main body portion 711 and an ejector pin portion 712, and the ejector pin portion 712 protrudes from one side of the main body portion 711. The main body portion 711 may be approximately in a round waist shape (which may also be referred to as a runway shape). A groove 713 may be disposed on a side that is of the main body portion 711 and that faces the ejector pin portion 712, and the groove 713 is disposed close to the ejector pin portion 712 and around the ejector pin portion 712.

The first contact 71 is made of a conductive material. The first contact 71 may be an integrally formed structural member.

Refer to FIG. 3 and FIG. 14. FIG. 14 is a diagram of a partial structure of the sixth assembly 46 of the earphone 10 shown in FIG. 3.

In some embodiments, the sixth assembly 46 includes a fourth appearance mesh 461. The fourth appearance mesh 461 may include a main body 4611 and two protrusions 4612. The main body 4611 is provided with a plurality of through holes 4613, to form a mesh structure. The main body 4611 may be approximately in a round waist shape (which may also be referred to as a runway shape). The two protrusions 4612 are fastened on a same side of the main body 4611, and are respectively located at two ends of the main body 4611.

The fourth appearance mesh 461 may be a metal mesh, to improve a fashion sense and mechanical reliability of the earphone 10, and lower a risk that a part located on a rear side of the fourth appearance mesh 461 is damaged by external force, for example, prevent penetration of an external sharp object, so as to extend a service life of the earphone 10. The fourth appearance mesh 461 may be an integrally formed structural member. For example, the fourth appearance mesh 461 may be formed by stamping a metal mesh member. In some other embodiments, the fourth appearance mesh 461 may alternatively be made of a plastic material or another material.

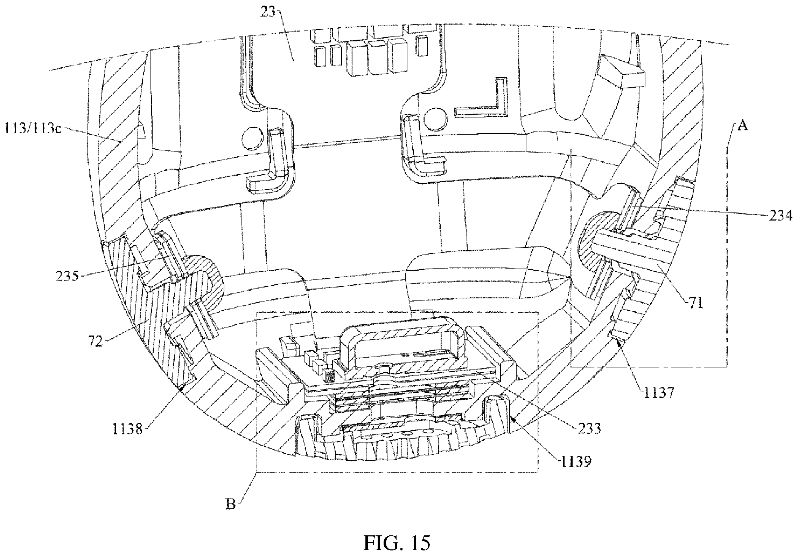

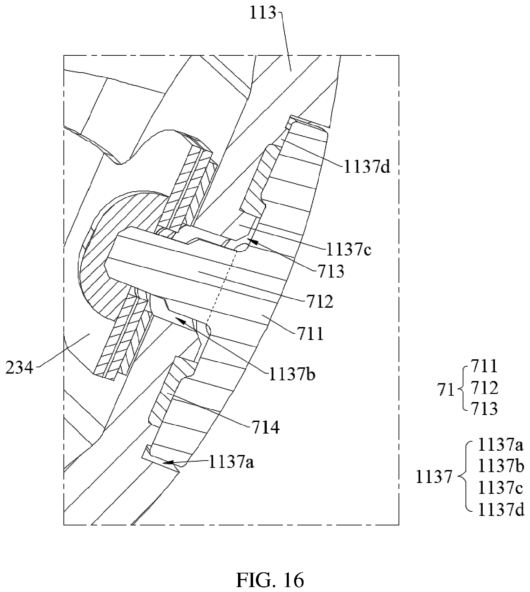

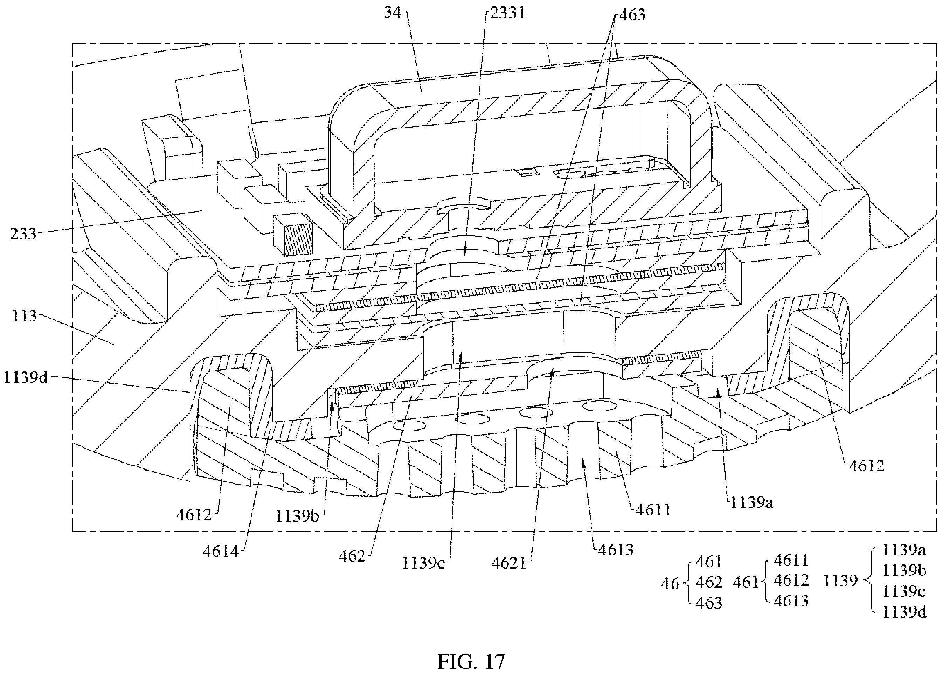

Refer to FIG. 15 to FIG. 17. FIG. 15 is a diagram of an internal structure of a partial structure of the earphone 10 shown in FIG. 1A, FIG. 16 is an enlarged view of a structure at A shown in FIG. 15, and FIG. 17 is an enlarged view of a structure at B shown in FIG. 15.

In some embodiments, a partial structure of the second flexible circuit board 23 is fastened to the bottom part 113c of the main housing member 113. For example, the second part 233 of the second flexible circuit board 23 is fastened to a region that is of the inner wall of the main housing member 113 and that corresponds to the third mounting groove 1139, the third part 234 of the second flexible circuit board 23 is fastened to a region that is of the inner wall of the main housing member 113 and that corresponds to the first mounting groove 1137, and the fourth part 235 of the second flexible circuit board 23 is fastened to a region that is of the inner wall of the main housing member 113 and that corresponds to the second mounting groove 1138.

For example, as shown in FIG. 15 and FIG. 16, the first contact 71 is mounted in the first mounting groove 1137 of the main housing member 113 and is exposed relative to the main housing member 113, and the first contact 71 is fastened and electrically connected to the third part 234 of the second flexible circuit board 23. The main body portion 711 of the first contact 71 is located in the recessed portion 1137a of the first mounting groove 1137, and the main body portion 711 of the first contact 71 may abut against the second protrusion 1137d in the first mounting groove 1137. The ejector pin portion 712 of the first contact 71 extends into the inner side space of the main housing member 113 through the communication portion 1137b of the first mounting groove 1137, and is soldered to the third part 234 of the second flexible circuit board 23, to implement fastening and an electrical connection.

The bottom wall of the recessed portion 1137a of the first mounting groove 1137 and the main body portion 711 of the first contact 71 may be fastened and hermetically connected by using an adhesive layer 714. The first protrusion 1137c in the first mounting groove 1137 may directly or partially extend into the groove 713 of the first contact 71, to form a sealing path with a curved portion. This improves sealing performance between the first contact 71 and the main housing member 113, and prevents external water vapor from entering the inner side space of the main housing member 113 through the first mounting groove 1137, to ensure sealing performance of the main board cavity 14c of the earphone 10.

The second contact 72 is mounted in the second mounting groove 1138 of the main housing member 113 and is exposed relative to the main housing member 113, and the second contact 72 is fastened and electrically connected to the fourth part 235 of the second flexible circuit board 23. For a connection structure between the second contact 72 and each of the main housing member 113 and the fourth part 235 of the second flexible circuit board 23, refer to a connection structure between the first contact 71 and each of the main housing member 113 and the third part 234 of the second flexible circuit board 23. Details are not described herein.

In this embodiment, the earphone 10 may be electrically connected to the charging case by using the first contact 71 and the second contact 72, to implement communication and charging.

For example, as shown in FIG. 15 and FIG. 17, the fourth appearance mesh 461 is mounted in the third mounting groove 1139 and is exposed relative to the main housing member 113. The main body 4611 of the fourth appearance mesh 461 is located in the first recessed portion 1139a of the third mounting groove 1139, and the two protrusions 4612 of the fourth appearance mesh 461 respectively extend into the third recessed portion 1139d of the third mounting groove 1139. The fourth appearance mesh 461 and the third mounting groove 1139 may be fastened and hermetically connected by using an adhesive layer 4614. The adhesive layer 4614 may be partially located between the main body 4611 of the fourth appearance mesh 461 and a wall surface of the first recessed portion 1139a of the third mounting groove 1139, or may be partially located between the two protrusions 4612 of the fourth appearance mesh 461 and a wall surface of the third recessed portion 1139d of the third mounting groove 1139. A sealing path is long and has a curved part, and sealing effect is better. The plurality of through holes 4613 on the main body 4611 of the fourth appearance mesh 461 may be disposed to directly face the second recessed portion 1139b of the third mounting groove 1139.

For example, the sixth assembly 46 may further include a baffle 462, one or more eighth mesh fabrics 463, and a plurality of adhesive layers. The baffle 462 may be mounted on the second recessed portion 1139b of the third mounting groove 1139, and is fastened to a bottom wall of the second recessed portion 1139b of the third mounting groove 1139 by using an adhesive layer. The baffle 462 covers the communication portion 1139c of the third mounting groove 1139. The baffle 462 is provided with a through hole 4621, and the through hole 4621 communicates with the first recessed portion 1139a of the third mounting groove 1139 and the communication portion 1139c of the third mounting groove 1139.

The one or more eighth mesh fabrics 463 are fastened to the inner wall of the main housing member 113, and cover the communication portion 1139c of the third mounting groove 1139. When there are a plurality of eighth mesh fabrics 463, the plurality of eighth mesh fabrics 463 are disposed in a stacked manner, and may be fastened to each other by using an adhesive layer. The eighth mesh fabric 463 may be fixedly connected to the inner wall of the main housing member 113 by using an adhesive layer. The eighth mesh fabric 463 is configured to prevent dust outside the earphone 10 from entering the inside of the earphone 10 through the third mounting groove 1139.

The second part 233 of the second flexible circuit board 23 is fastened on a side that is of the eighth mesh fabric 463 and that faces away from the main housing member 113, and the third microphone 34 is fastened on a side that is of the second part 233 of the second flexible circuit board 23 and that faces away from the eighth mesh fabric 463. The second part 233 of the second flexible circuit board 23 is provided with a communication hole 2331, the communication hole 2331 communicates with the inside of the third microphone 34, and the eighth mesh fabric 463 covers the communication hole 2331. The eighth mesh fabric 463 is configured to prevent dust from entering the third microphone 34.

The communication hole 2331 of the second flexible circuit board 23 and the through hole 4621 of the baffle 462 are distributed in a staggered manner, and projections of the communication hole 2331 and the through hole 4621 on the eighth mesh fabric 463 at least partially do not overlap. The through hole 4613 of the fourth appearance mesh 461, the through hole 4621 of the baffle 462, the communication portion 1139c of the third mounting groove 1139, the eighth mesh fabric 463, and the communication hole 2331 of the second flexible circuit board 23 form a continuous and curved sound pickup channel. A sound outside the earphone 10 can enter the third microphone 34 through the sound pickup channel, and the third microphone 34 implements sound pickup.

In this embodiment, because the sound pickup channel is curved, a sound (for example, a wind sound) outside the earphone 10 can be prevented from directly entering the third microphone 34, to improve windproof effect, and improve sound pickup accuracy of the third microphone 34.

For example, a peripheral edge of the second part 233 of the second flexible circuit board 23 and the inner wall of the main housing member 113 may be hermetically connected, for example, may be hermetically connected by using an adhesive layer, to prevent external water vapor from entering the inside of the main housing member 113, so as to ensure sealing performance of the main board cavity 14c of the earphone 10.

With reference to FIG. 3 and FIG. 6 again, the earphone 10 may further include a battery support 9, and the battery support 9 may be mounted in the bottom space 111c of the main housing 11. The battery support 9 fits with the main housing member 113, and is configured to fasten the battery 73, to improve assembly stability of the battery 73. The battery support 9 may be further configured to support and/or fasten the second flexible circuit board 23. The battery support 9 may be further configured to provide a support surface. The support surface faces the front side of the earphone 10, and the support surface and the main housing member 113 may jointly support and be connected to the sealing cover member 114, to improve connection stability and strength of the sealing cover member 114.

In the foregoing embodiment, the earphone 10 has ultimate space utilization and matches a brand new appearance. This can not only meet requirements of the user for product exquisiteness, wearing comfort, and a brand new appearance, but also meet requirements of the user for sound quality, noise reduction, and battery life extension of the wireless earphone 10.

This application further provides an earphone assembly. The earphone assembly includes a charging case and an earphone. The charging case is configured to accommodate the earphone. The charging case may also be referred to as a charging compartment or an earphone case. The charging case includes a battery that can charge the earphone accommodated in the case, to meet a long-term use requirement of a user.

Regular horizontal display surfaces are used for an upper cover and a lower cover of a conventional charging case, and an earphone is vertically placed in the charging case. A process of taking out the earphone from the charging case is affected by an exposed height of the earphone, magnetic attraction force of the earphone, and a form of the earphone, which becomes a major disadvantage in a use process of a user. For example, to meet a requirement for magnetic attraction force required for placing the earphone in the case, a specific magnetic attraction force requirement needs to be met between the earphone and the charging case. Therefore, convenience of taking out the earphone is severely affected, and user experience is poor. To improve the convenience of taking out the earphone, the magnetic attraction force usually needs to be strictly controlled in a production line, resulting in an increase in costs of an earphone assembly. In addition, in the conventional earphone assembly, an excessively small part of the earphone is exposed to the charging case, and a region that can be held by the user is small. Consequently, it is difficult for the user to take out the earphone.

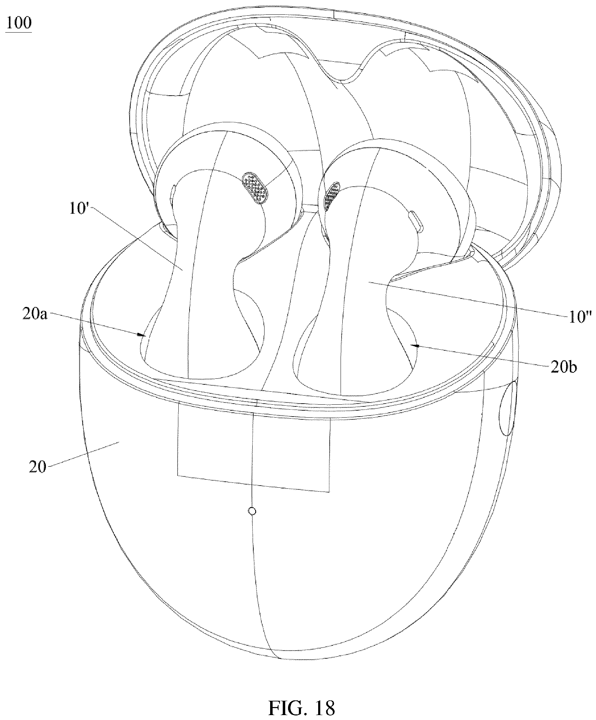

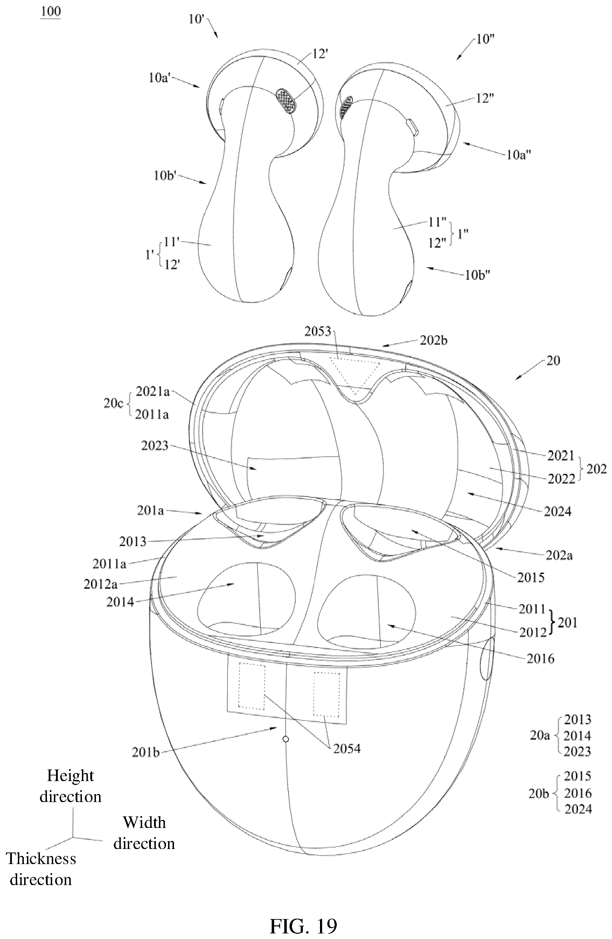

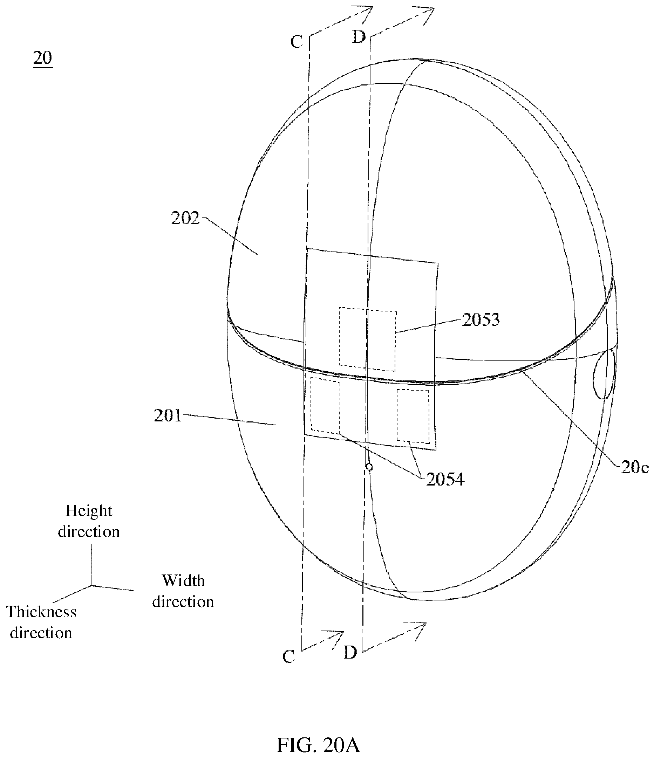

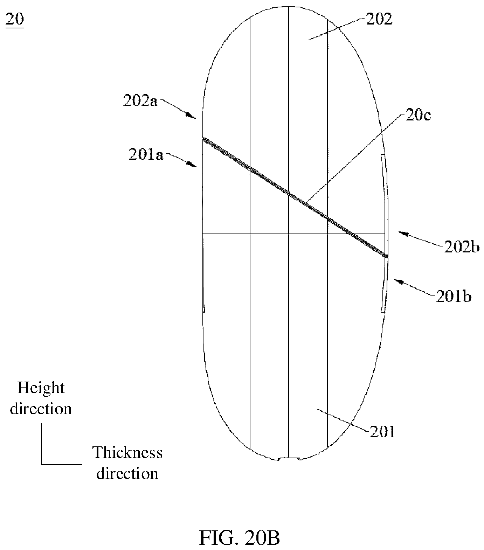

Refer to FIG. 18, FIG. 19, FIG. 20A, and FIG. 20B. FIG. 18 is a diagram of a structure of an earphone assembly 100 in some embodiments according to an embodiment of this application, FIG. 19 is a diagram of a structure of the earphone assembly 100 shown in FIG. 18 in another use state, FIG. 20A is a diagram of a structure of a charging case 20 of the earphone assembly 100 shown in FIG. 19 in another use state, and FIG. 20B is a diagram of a structure of the charging case 20 shown in FIG. 20A at another angle.

In some embodiments, the earphone assembly 100 includes the charging case 20, a first earphone 10', and a second earphone 10". The charging case 20 has a first earphone slot 20a and a second earphone slot 20b that are disposed at an interval. The first earphone slot 20a and the second earphone slot 20b are configured to accommodate the earphones. The first earphone 10' can be detachably accommodated in the first earphone slot 20a, and the second earphone 10" can be detachably accommodated in the second earphone slot 20b. In the first earphone 10' and the second earphone 10", one is a left earphone, and the other is a right earphone. In this embodiment, an example in which the first earphone 10' is the left earphone and the second earphone 10" is the right earphone is used for description. In some other embodiments, the first earphone 10' and the second earphone 10" may be interchanged. Both the first earphone 10' and the second earphone 10" use all or most of the structures of the earphone in the foregoing embodiments.

A housing 1' of the first earphone 10' and a housing 1" of the second earphone 10" are of mutually symmetric structures, and the first earphone slot 20a and the second earphone slot 20b are of mutually symmetric structures. The housing 1' of the first earphone 10' is of an asymmetric structure, the first earphone slot 20a is of an asymmetric structure, and a shape of the first earphone slot 20a is the same as a shape of the housing 1' of the first earphone 10'. The housing 1" of the second earphone 10" is of an asymmetric structure, the second earphone slot 20b is of an asymmetric structure, and a shape of the second earphone slot 20b is the same as a shape of the housing 1" of the second earphone 10". Briefly, the first earphone slot 20a is adapted to the first earphone 10', and the second earphone slot 20b is adapted to the second earphone 10". In some examples, when the first earphone 10' is placed in the first earphone slot 20a and the second earphone 10" is placed in the second earphone slot 20b, the two earphones are correctly placed, and the charging case 20 may be closed; or when the first earphone 10' is placed in the second earphone slot 20b and the second earphone 10" is placed in the first earphone slot 20a, the two earphones are incorrectly placed, and the charging case 20 cannot be closed.

For example, the charging case 20 has a width direction, a thickness direction, and a height direction that are perpendicular to each other, the first earphone slot 20a and the second earphone slot 20b are arranged in the width direction of the charging case 20, and a dimension of the charging case 20 in the height direction is greater than a dimension of the charging case 20 in the thickness direction. The charging case 20 includes a case body 201 and a case cover 202, and the case cover 202 is rotatably connected to the case body 201.

For example, as shown in FIG. 20B, the case body 201 has a first end 201a and a second end 201b that are disposed opposite to each other, and the case cover 202 has a first end 202a and a second end 202b that are disposed opposite to each other. The first end 202a of the case cover 202 is rotatably connected to the first end 201a of the case body 201, and a rotation center is parallel to the width direction of the charging case 20. The second end 202b of the case cover 202 is far away from the second end 201b of the case body 201, to open the case cover 202 relative to the case body 201, or the second end 202b of the case cover 202 is close to the second end 201b of the case body 201, to close the case cover 202 relative to the case body 201. The first end 201a of the case body 201 is higher than the second end 201b of the case body 201. That is, in the height direction of the charging case 20, a dimension of the first end 201a of the case body 201 is greater than a dimension of the second end 201b of the case body 201. In this case, an entire top part of the case body 201 is inclined.

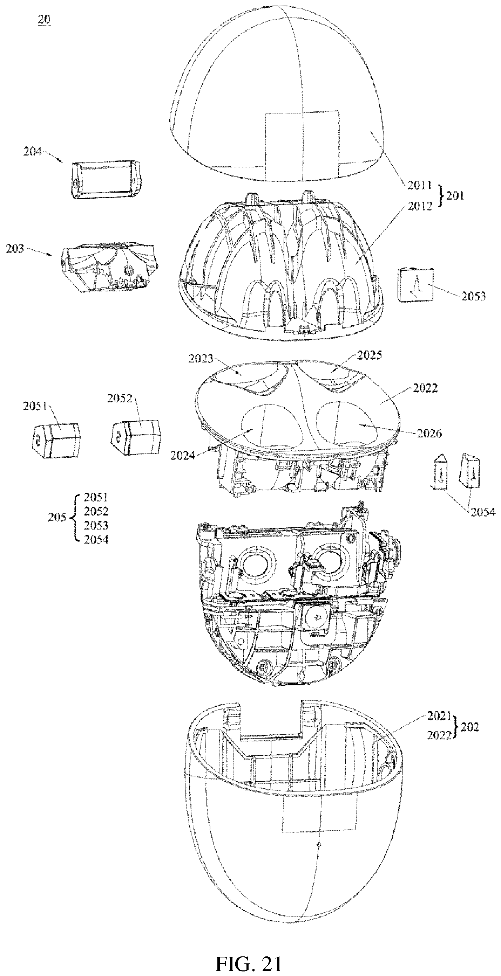

Refer to FIG. 19 and FIG. 21. FIG. 21 is a diagram of a partial exploded structure of the charging case 20 shown in FIG. 19.

In some embodiments, the case body 201 includes a case body housing 2011 and a case body lining 2012, and the case body lining 2012 is fastened on an inner side of the case body housing 2011; and the case cover 202 includes a case cover housing 2021 and a case cover lining 2022, and the case cover lining 2022 is fastened on an inner side of the case cover housing 2021. Both the first earphone slot 20a and the second earphone slot 20b are partially formed on the case body lining 2012 and partially formed on the case cover lining 2022.

With reference to FIG. 19 to FIG. 20B again, the case body 201 includes a top surface facing the case cover 202, and the top surface of the case body 201 includes a top surface 2011a of the case body housing 2011 and a top surface 2012a of the case body lining 2012; and the case cover 202 includes a bottom surface facing the case body 201, and the bottom surface of the case cover 202 includes a bottom surface 2021a of the case cover housing 2021 and a bottom surface of the case cover lining 2022. When the charging case 20 is closed, the top surface of the case body 201 is opposite to the bottom surface of the case cover 202, the top surface 2011a of the case body housing 2011 is opposite to the bottom surface 2021a of the case cover housing 2021, and the top surface 2012a of the case body lining 2012 is opposite to the bottom surface of the case cover lining 2022.

A connection between the top surface 2011a of the case body housing 2011 and the bottom surface 2021a of the case cover housing 2021 may be seen from an outside of the charging case 20, to form a parting surface 20c of the charging case 20. That is, the parting surface 20c of the charging case 20 includes the top surface 2011a of the case body housing 2011 and the bottom surface 2021a of the case cover housing 2021. The parting surface 20c of the charging case 20 is inclined to the thickness direction of the charging case 20 and inclined to the height direction of the charging case 20.

The top surface 2011a of the case body housing 2011 may be a plane, and the bottom surface 2021a of the case cover housing 2021 may be a plane, so that processing difficulty of the case body housing 2011 and the case cover housing 2021 is reduced, and the case body housing 2011 and the case cover housing 2021 are easily closed, and the parting surface 20c of the charging case 20 is a plane. In this case, an appearance of the charging case 20 is exquisite and concise. In some other embodiments, the parting surface of the charging case 20 may alternatively be a curved surface. This is not strictly limited in this embodiment of this application.

As shown in FIG. 18, when the charging case 20 is opened, the first earphone 10' and the second earphone 10" are placed on the case body lining 2012, the first earphone 10' and the second earphone 10" are exposed relative to the top surface 2012a of the case body lining 2012, and the top surface 2012a of the case body lining 2012 forms a display surface of the charging case 20.

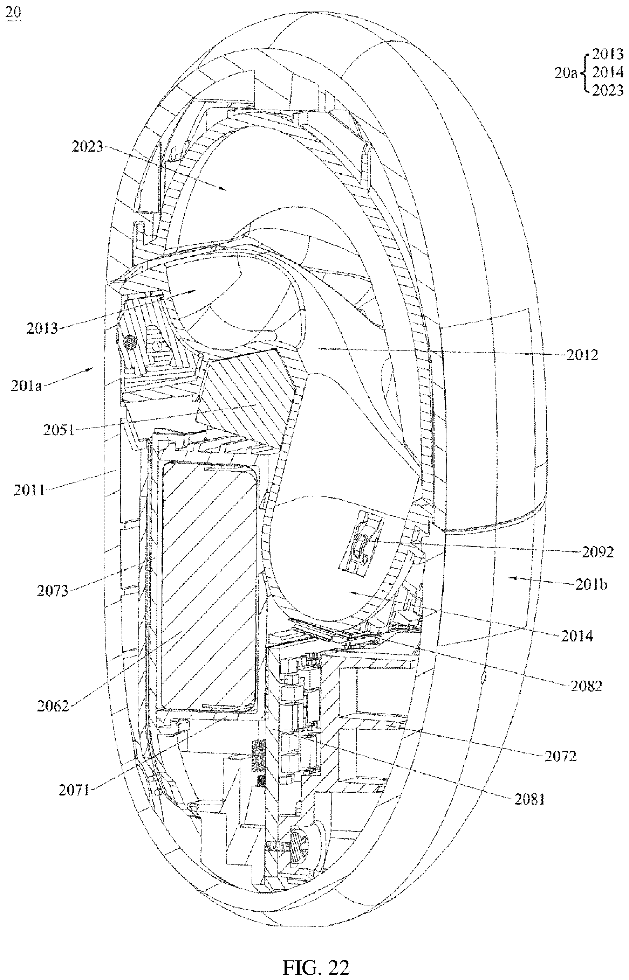

Refer to FIG. 19, FIG. 21, and FIG. 22. FIG. 22 is a diagram of a cross-sectional structure of FIG. 20A along C-C. For ease of illustration, a view in FIG. 22 is obtained by rotating a view in FIG. 20A.

In some embodiments, the first earphone slot 20a includes a first top slot 2013, a first bottom slot 2014, and a first fitting slot 2023, the first top slot 2013 and the first bottom slot 2014 are formed on the case body lining 2012, and the first fitting slot 2023 is formed on the case cover lining 2022. As shown in FIG. 22, when the charging case 20 is closed, the first top slot 2013, the first bottom slot 2014, and the first fitting slot 2023 jointly form the first earphone slot 20a, and the shape of the first earphone slot 20a is adapted to a shape of the first earphone 10'.

As shown in FIG. 19 and FIG. 22, the first top slot 2013 is closer to the first end 201a of the case body 201 than the first bottom slot 2014, a slot depth of the first top slot 2013 is less than a slot depth of the first bottom slot 2014, the first top slot 2013 is configured to accommodate an earbud 10a' of the first earphone 10', and the first bottom slot 2014 is configured to accommodate a stem 10b" of the first earphone 10'. In the first earphone 10', a main housing 11' of the housing 1' includes a first part that is close to a front housing 12' and a second part that is far away from the front housing 12', the front housing 12' and the first part of the main housing 11' form the earbud 10a' of the first earphone 10', and the second part of the main housing 11' forms the stem 10b" of the first earphone 10'.

Both an opening of the first top slot 2013 and an opening of the first bottom slot 2014 are located on the top surface of the case body lining 2012, and the opening of the first bottom slot 2014 is lower than the opening of the first top slot 2013. A lowest edge of the opening of the first top slot 2013 is not lower than a highest edge of the opening of the first bottom slot 2014. In this case, the display surface of the charging case 20 is an inclined surface. When the first earphone 10' is placed in the first earphone slot 20a, a large part of the first earphone 10' is exposed relative to the charging case 20, so that a user can easily take out the earphone, to improve user experience of taking out the earphone from the charging case 20, ensure specific aesthetics, and improve product appearance exquisiteness.

The opening of the first top slot 2013 may be disposed at an interval from the opening of the first bottom slot 2014. In this case, an end that is of the opening of the first bottom slot 2014 and that is close to the opening of the first top slot 2013 is lower than an end that is of the opening of the first top slot 2013 and that is close to the opening of the first bottom slot 2014. In this embodiment, the opening of the first bottom slot 2014 may be significantly lower than the opening of the first top slot 2013, so that when the first earphone 10' is placed in the first earphone slot 20a, a larger part of the first earphone 10' is exposed relative to the charging case 20.

A lowest part of a bottom wall of the first top slot 2013 is not lower than a lowest edge of the opening of the first bottom slot 2014. In this embodiment, when the first earphone 10' is placed in the first earphone slot 20a, a larger part of the first earphone 10' is exposed relative to the charging case 20.

For example, when the first earphone 10' is placed in the first earphone slot 20a, a bottom part of a main housing member of the main housing 11' is located in the first bottom slot 2014, both the front housing 12' and a top part of the main housing member are partially located in the first top slot 2013 and partially located outside the case body 201, and a middle part of the main housing member is located outside the case body 201. For a diagram of a structure and descriptions of the main housing member of the main housing 11', refer to the foregoing related content of the main housing member 113 of the earphone 10.

Similarly, the second earphone slot 20b includes a second top slot 2015, a second bottom slot 2016, and a second fitting slot 2024, the second top slot 2015 and the second bottom slot 2016 are formed on the case body lining 2012, and the second fitting slot 2024 is formed on the case cover lining 2022. When the charging case 20 is closed, the second top slot 2015, the second bottom slot 2016, and the second fitting slot 2024 jointly form the second earphone slot 20b, and the shape of the second earphone slot 20b is adapted to a shape of the second earphone 10".

The second top slot 2015 is closer to the first end 201a of the case body 201 than the second bottom slot 2016, a slot depth of the second top slot 2015 is less than a slot depth of the second bottom slot 2016, the second top slot 2015 is configured to accommodate an earbud 10a" of the second earphone 10", and the second bottom slot 2016 is configured to accommodate a stem 10b" of the second earphone 10". In the second earphone 10", a main housing 11" includes a first part that is close to a front housing 12" and a second part that is far away from the front housing 12", the front housing 12" and the first part of the main housing 11" form the earbud 10a" of the second earphone 10", and the second part of the main housing 11" forms the stem 10b" of the second earphone 10".

Both an opening of the second top slot 2015 and an opening of the second bottom slot 2016 are located on the top surface of the case body lining 2012, and the opening of the second bottom slot 2016 is lower than the opening of the second top slot 2015. A lowest edge of the opening of the second top slot 2015 is not lower than a highest edge of the opening of the second bottom slot 2016. In this case, the display surface of the charging case 20 is an inclined surface. When the second earphone 10" is placed in the second earphone slot 20b, a large part of the second earphone 10" is exposed relative to the charging case 20, so that a user can easily take out the earphone, to improve user experience of taking out the earphone from the charging case 20, ensure specific aesthetics, and improve product appearance exquisiteness.

The opening of the second top slot 2015 may be disposed at an interval from the opening of the second bottom slot 2016. In this case, an end that is of the opening of the second bottom slot 2016 and that is close to the opening of the second top slot 2015 is lower than an end that is of the opening of the second top slot 2015 and that is close to the opening of the second bottom slot 2016. In this embodiment, the opening of the second bottom slot 2016 may be significantly lower than the opening of the second top slot 2015, so that when the second earphone 10" is placed in the second earphone slot 20b, a larger part of the second earphone 10" is exposed relative to the charging case 20.

A lowest part of a bottom wall of the second top slot 2015 is not lower than a lowest edge of the opening of the second bottom slot 2016. In this embodiment, when the second earphone 10" is placed in the second earphone slot 20b, a larger part of the second earphone 10" is exposed relative to the charging case 20.

For example, when the second earphone 10" is placed in the second earphone slot 20b, a bottom part of a main housing member of the main housing 11" is located in the second bottom slot 2016, both the front housing 12" and a top part of the main housing member are partially located in the second top slot 2015 and partially located outside the case body 201, and a middle part of the main housing member is located outside the case body 201. For a diagram of a structure and descriptions of the main housing member of the main housing 11", refer to the foregoing related content of the main housing member 113 of the earphone 10.

For example, a top part of the case body lining 2012 may protrude relative to the case body housing 2011, that is, the top surface 2011a of the case body housing 2011 protrudes relative to the top surface 2012a of the case body lining 2012. In this case, the user can more conveniently take out the earphone placed in the charging case 20, to improve user experience.

The top surface 2011a of the case body housing 2011 may be a curved surface, so that shapes of the opening of the first top slot 2013 and the opening of the first bottom slot 2014 better match and support the first earphone 10', and shapes of the opening of the second top slot 2015 and the opening of the second bottom slot 2016 may better match and support the second earphone 10". In this case, the two earphones are stably and reliably placed in the charging case 20, and are convenient for the user to take out. In addition, the display surface of the charging case 20 is beautiful and exquisite. In some other embodiments, the top surface 2011a of the case body housing 2011 may alternatively be a plane. This is not strictly limited in this embodiment of this application.

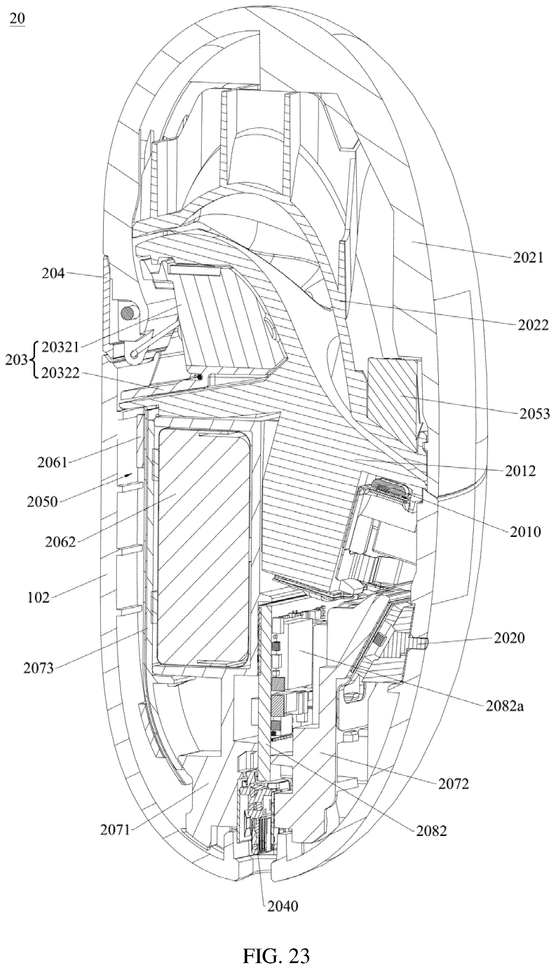

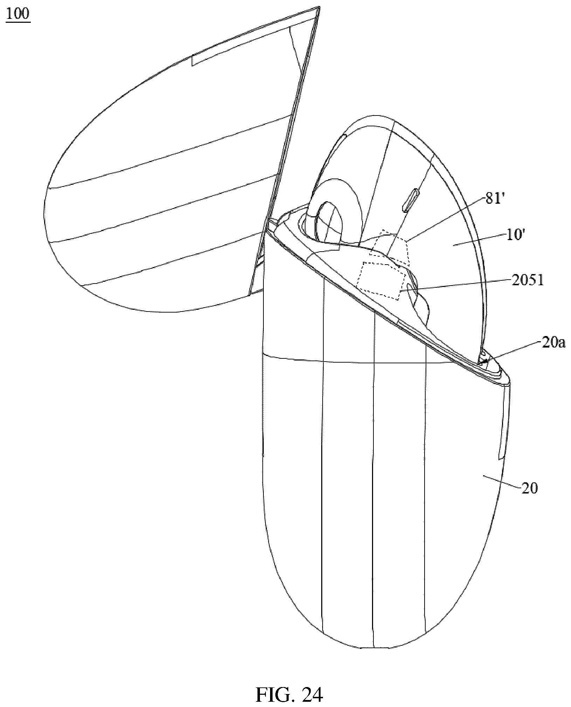

Refer to FIG. 21 to FIG. 24. FIG. 23 is a diagram of a cross-sectional structure of FIG. 20A along D-D, and FIG. 24 is a diagram of a structure of the earphone assembly 100 shown in FIG. 18 at another angle. For ease of illustration, a view in FIG. 23 is obtained by rotating a view in FIG. 20A.

In some embodiments, as shown in FIG. 21 and FIG. 23, the charging case 20 further includes a hinge assembly 203 and a decorative part 204. The hinge assembly 203 is mounted on the case body 201, and the case cover 202 may be rotatably connected to the case body 201 by using the hinge assembly 203. The decorative part 204 is mounted on an outer side of the hinge assembly 203, and is configured to cover and decorate the hinge assembly 203, to improve appearance exquisiteness of the charging case 20.

In some embodiments, as shown in FIG. 21 and FIG. 22, the charging case 20 further includes a magnetic attraction assembly 205, and the magnetic attraction assembly 205 includes a first magnet 2051, a second magnet 2052, a third magnet 2053, and a fourth magnet 2054.

The first magnet 2051 is fastened to the case body lining 2012, and the first magnet 2051 is located below the top surface of the case body lining 2012, and is located between the first top slot 2013 and the first bottom slot 2014. In this embodiment, a curved parting surface 20c of the case body lining 2012 is designed, so that there is large space between the first top slot 2013 and the first bottom slot 2014, and the first magnet 2051 with a large volume can be placed, to increase magnetic attraction force used to attract the first earphone 10'. As shown in FIG. 24, when the first earphone 10' is placed in the first earphone slot 20a, a magnetic attraction member 81' of the first earphone 10' and the first magnet 2051 of the charging case 20 are disposed opposite to each other, and the magnetic attraction member 81' and the first magnet 2051 are close to each other and have a small spacing, to generate sufficient magnetic attraction force, so that the first earphone 10' is stably placed in the charging case 20.

The second magnet 2052 is fastened to the case body lining 2012, and the second magnet 2052 is located below the top surface of the case body lining 2012, and is located between the second top slot 2015 and the second bottom slot 2016. When the second earphone 10" is placed in the second earphone slot 20b, a magnetic attraction member of the second earphone 10" and the second magnet 2052 of the charging case 20 are disposed opposite to each other, and the magnetic attraction member and the second magnet 2052 are close to each other and have a small spacing.

As shown in FIG. 19 and FIG. 23, the third magnet 2053 is fastened to the case cover lining 2022, the third magnet 2053 is located between the case cover lining 2022 and the case cover housing 2021, and the third magnet 2053 is located at a middle position of the second end 202b of the case cover 202, and is disposed close to a bottom part of the case cover 202.

With reference to FIG. 19, FIG. 20A, and FIG. 21, there may be two fourth magnets 2054. The fourth magnet 2054 is fastened to the case body lining 2012, and is located between the case body lining 2012 and the case body housing 2011. The fourth magnet 2054 is located at a middle position of the second end 201b of the case body 201, and is disposed close to the top part of the case body 201. When the charging case 20 is closed, magnetic attraction force is generated between the third magnet 2053 and the fourth magnet 2054, so that the charging case 20 is stably closed.

With reference to FIG. 23, in some embodiments, the charging case 20 further includes a wireless charging coil 2061 and a battery 2062. Both the wireless charging coil 2061 and the battery 2062 are fastened in the case body 201, and are located below the hinge assembly 203. The charging case 20 may charge the battery 2062 by using the wireless charging coil 2061.

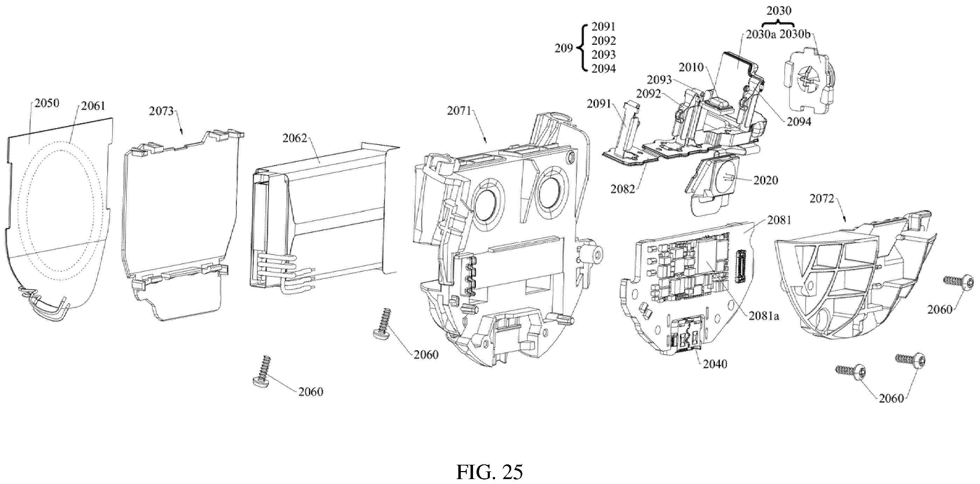

Refer to FIG. 22, FIG. 23, and FIG. 25. FIG. 25 is a diagram of an exploded structure of the partial structure of the charging case 20 shown in FIG. 21.

In some embodiments, the charging case 20 further includes a plurality of parts mounted between the case body housing 2011 and the case body lining 2012. The plurality of parts may include a first housing member 2071, a second housing member 2072, a third housing member 2073, a circuit board 2081, a connection circuit board 2082, an electrode assembly 209, a Hall sensor 2010, an indicator 2020, a key assembly 2030, an electrical connector 2040, a wireless charging assembly 2050, the battery 2062, and a plurality of fasteners 2060.

The second housing member 2072 and the third housing member 2073 are respectively located on two sides of the first housing member 2071, and are fixedly connected to the first housing member 2071. The second housing member 2072 may be fastened to the first housing member 2071 by using the fastener 2060. In some other embodiments, the second housing member 2072 may alternatively be fastened to the first housing member 2071 through snap-fitting or adhesion, or in another manner. The third housing member 2073 may be fastened to the first housing member 2071 through snap-fitting. In some other embodiments, the second housing member 2072 may alternatively be fastened to the first housing member 2071 by using the fastener 2060, through adhesion, or in another manner.

The circuit board 2081 is located between the first housing member 2071 and the second housing member 2072, and is fixedly connected to the first housing member 2071. The circuit board 2081 may be located below the first bottom slot 2014 and the second bottom slot 2016. A plurality of components may be disposed on the circuit board 2081, and include but are not limited to a main control chip 2081a, a fitting component of the main control chip 2081a, a connection port, and the like. The plurality of components are electrically connected to the circuit board 2082. The circuit board 2081 may be a rigid printed circuit board.

The connection circuit board 2082 may be a flexible circuit board or a rigid-flex circuit board. Parts such as the electrode assembly 209, a key 2030a of the key assembly 2030, the Hall sensor 2010, and the indicator 2020 may be fastened and electrically connected to the connection circuit board 2082. The connection circuit board 2082 is electrically connected to the circuit board 2081, so that a part on the connection circuit board 2082 is electrically connected to the circuit board 2081. The connection circuit board 2082 may be partially located below the first bottom slot 2014 and the second bottom slot 2016, and partially located on a side that is of the second bottom slot 2016 and that is far away from the first bottom slot 2014.

The electrode assembly 209 may include a first electrode 2091, a second electrode 2092, a third electrode 2093, and a fourth electrode 2094. Both the first electrode 2091 and the second electrode 2092 are at least partially located in the first earphone slot 20a, and the first electrode 2091 and the second electrode 2092 are configured to be electrically connected to the first earphone 10' placed in the first earphone slot 20a. The first electrode 2091 and the second electrode 2092 are one positive electrode and one negative electrode. Both the third electrode 2093 and the fourth electrode 2094 are at least partially located in the second earphone slot 20b, and the third electrode 2093 and the fourth electrode 2094 are configured to be electrically connected to the second earphone 10" placed in the second earphone slot 20b. The third electrode 2093 and the fourth electrode 2094 are one positive electrode and one negative electrode. The second electrode 2092 and the third electrode 2093 are located between the first electrode 2091 and the fourth electrode 2094. For example, a spring plate structure may be used for the plurality of electrodes. In some other embodiments, an ejector pin structure or another structure may alternatively be used for the plurality of electrodes.

The Hall sensor 2010 is located between the first bottom slot 2014 and the second bottom slot 2016, and is disposed close to the top surface of the case body lining 2012. When the charging case 20 is closed, the Hall sensor 2010 is disposed to correspond to the third magnet 2053. The Hall sensor 2010 is configured to detect whether the charging case 20 is closed.

A keycap 2030b of the key assembly 2030 may be mounted on an outer side housing of the housing 1, and is a movable part. The keycap 2030b abuts against the key 2030a when being pressed by the user.

The indicator 2020 may be located on a side that is of the second housing member 2072 and that faces away from the first housing member 2071, and is fastened to the second housing member 2072. Light emitted by the indicator 2020 may pass through the case body housing 2011, and be emitted to an outside of the charging case 20. The indicator 2020 may be configured to indicate a charging status, a battery level change, and the like.

The battery 2062 is located between the first housing member 2071 and the third housing member 2073, and the battery 2062 is fastened to the first housing member 2071. The battery 2062 is located below the first top slot 2013 and the second top slot 2015, and is located on one side of the first bottom slot 2014 and the second bottom slot 2016. A lead of the battery 2062 may bypass the first housing member 2071 and be connected to the circuit board 2081.

The wireless charging assembly 2050 is located on a side that is of the third housing member 2073 and that faces away from the first housing member 2071, and is fastened to the third housing member 2073. The wireless charging assembly 2050 includes the wireless charging coil 2061 and a lead, and the lead bypasses the third housing member 2073 and is connected to the circuit board 2081.

The electrical connector 2040 may be fastened and electrically connected to the circuit board 2082. The electrical connector 2040 is disposed to correspond to a charging port at a bottom part of the case body housing 2011. In this embodiment, the charging case 20 may be wirelessly charged by using the wireless charging coil 2061, or the charging case 20 may be charged in a wired manner by using the electrical connector 2040.

Electrical connection between the earphone in the earphone assembly 100 and the charging case 20:

In this embodiment of this application, a large part of each of the first earphone 10' and the second earphone 10" is exposed to the case body lining 2012. Therefore, in the first earphone 10' and the second earphone 10", there is a case in which the left earphone and the right earphone are reversely placed, and there may be further a case in which a single earphone is reversely placed. However, because the first bottom slot 2014 and the second bottom slot 2016 are shallow, and two contacts of each of the first earphone 10' and the second earphone 10" are distinguished by a positive electrode and a negative electrode, when the first earphone 10' and the second earphone 10" are placed in the charging case 20 at inaccurate positions, contacts of the first earphone 10' and the second earphone 10" are prone to be reversely connected to electrodes of the charging case 20. Consequently, circuits and/or components (referred to as next circuits below) that are of the first earphone 10' and the second earphone 10" and that are connected after the contacts are damaged.

Therefore, an anti-reverse connection solution is provided for the earphone assembly 100 in this application, to avoid component damage when the first earphone 10' and the second earphone 10" are placed in the case at incorrect positions, so as to extend a service life of the earphone assembly 100.

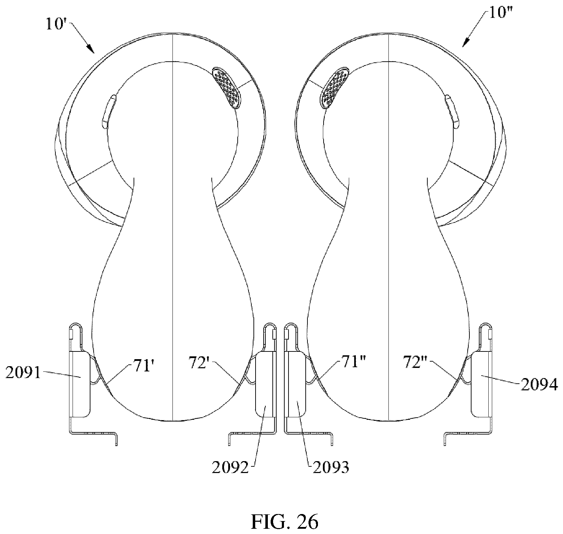

Refer to FIG. 18 and FIG. 26. FIG. 26 is a diagram of a partial structure of the earphone assembly 100 shown in FIG. 18.

In some embodiments, when the first earphone 10' is placed in the first earphone slot 20a, the earbud 10a' of the first earphone 10' is placed in the first top slot 2013, the stem 10b" of the first earphone 10' is placed in the first bottom slot 2014, the second earphone 10" is placed in the second earphone slot 20b, the earbud 10a" of the second earphone 10" is placed in the second top slot 2015, and the stem 10b" of the second earphone 10" is placed in the second bottom slot 2016, the first earphone 10' and the second earphone 10" are correctly placed in the charging case 20.

The first earphone 10' includes a first contact 71' and a second contact 72' that are disposed at an interval, and both the first contact 71' of the first earphone 10' and the second contact 72' of the first earphone 10' are fastened to the housing 1' of the first earphone 10', and are exposed relative to the housing 1' of the first earphone 10'. The second earphone 10" includes a first contact 71" and a second contact 72" that are disposed at an interval, and both the first contact 71" of the second earphone 10" and the second contact 72" of the second earphone 10" are fastened to the housing 1" of the second earphone 10", and are exposed relative to the housing 1" of the second earphone 10". A polarity of the first contact 71" of the second earphone 10" is the same as a polarity of the first contact 71' of the first earphone 10', and a polarity of the second contact 72" of the second earphone 10" is the same as a polarity of the second contact 72' of the first earphone 10'. The housing 1' of the first earphone 10' and the housing 1" of the second earphone 10" are of mutually symmetric structures, the first contact 71' of the first earphone 10' is symmetrically disposed with the second contact 72" of the second earphone 10", and the second contact 72' of the first earphone 10' is symmetrically disposed with the first contact 71" of the second earphone 10". When the first earphone 10' and the second earphone 10" are correctly placed in the charging case 20, the polarities of the plurality of contacts of the first earphone 10' and the second earphone 10" are sequentially arranged as positive, negative, positive, and negative, or negative, positive, negative, and positive.

For example, in the charging case 20, a polarity of the first electrode 2091 is the same as a polarity of the third electrode 2093, and a polarity of the second electrode 2092 is the same as a polarity of the fourth electrode 2094. That is, the polarities of the first electrode 2091 to the fourth electrode 2094 of the charging case 20 are sequentially arranged as positive, negative, positive, and negative, or negative, positive, negative, and positive.

When the first earphone 10' and the second earphone 10" are correctly placed in the charging case 20, the first contact 71' of the first earphone 10' is in contact with the first electrode 2091, the second contact 72' of the first earphone 10' is in contact with the second electrode 2092, the first contact 71" of the second earphone 10" is in contact with the third electrode 2093, and the second contact 72" of the second earphone 10" is in contact with the fourth electrode 2094. In this case, the polarities of the contacts of the first earphone 10' and the second earphone 10" correspond to the polarities of the plurality of electrodes of the charging case 20, there is a correct connection, and the first earphone 10' and the second earphone 10" can normally communicate with the charging case 20 and be charged.

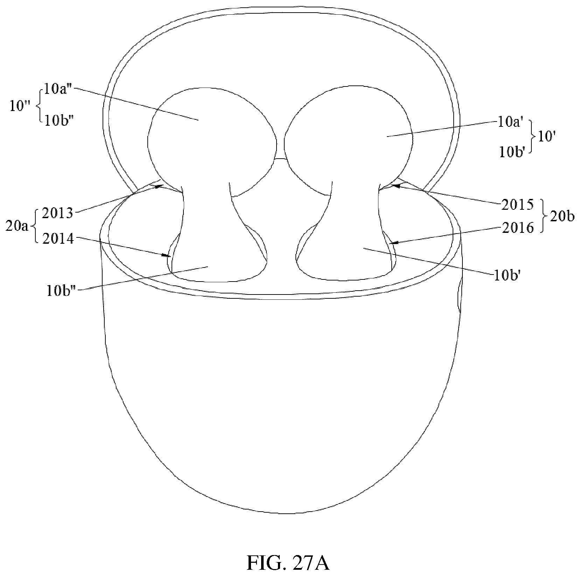

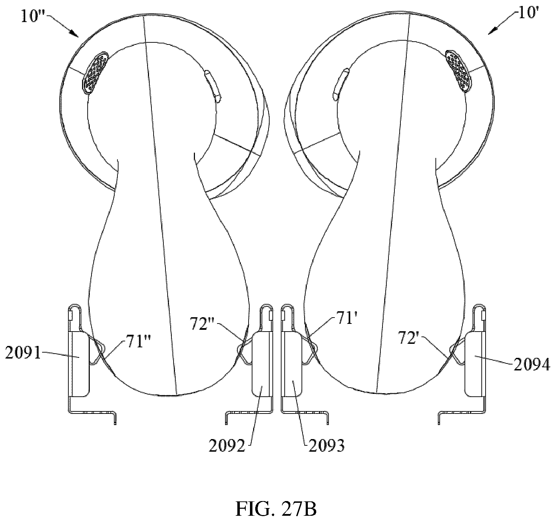

Refer to FIG. 27A and FIG. 27B. FIG. 27A is a diagram of a structure of the earphone assembly 100 shown in FIG. 18 in another use state, and FIG. 27B is a diagram of a partial structure of the earphone assembly 100 shown in FIG. 27A.

When the first earphone 10' is placed in the second earphone slot 20b, the earbud 10a' of the first earphone 10' is placed in the second top slot 2015, the stem 10b" of the first earphone 10' is placed in the second bottom slot 2016, the second earphone 10" is placed in the first earphone slot 20a, the earbud 10a" of the second earphone 10" is placed in the first top slot 2013, and the stem 10b" of the second earphone 10" is placed in the first bottom slot 2014, the first earphone 10' and the second earphone 10" are incorrectly placed in the charging case 20. This is a case in which the two earphones are reversely placed.

In this case, the first contact 71" of the second earphone 10" is in contact with the first electrode 2091, the second contact 72" of the second earphone 10" is in contact with the second electrode 2092, the first contact 71' of the first earphone 10' is in contact with the third electrode 2093, and the second contact 72' of the first earphone 10' is in contact with the fourth electrode 2094. The polarities of the contacts of the first earphone 10' and the second earphone 10" still correspond to the polarities of the plurality of electrodes of the charging case 20, and there is a correct connection. Therefore, damage to the next circuits of the first earphone 10' and the second earphone 10" can be effectively avoided.

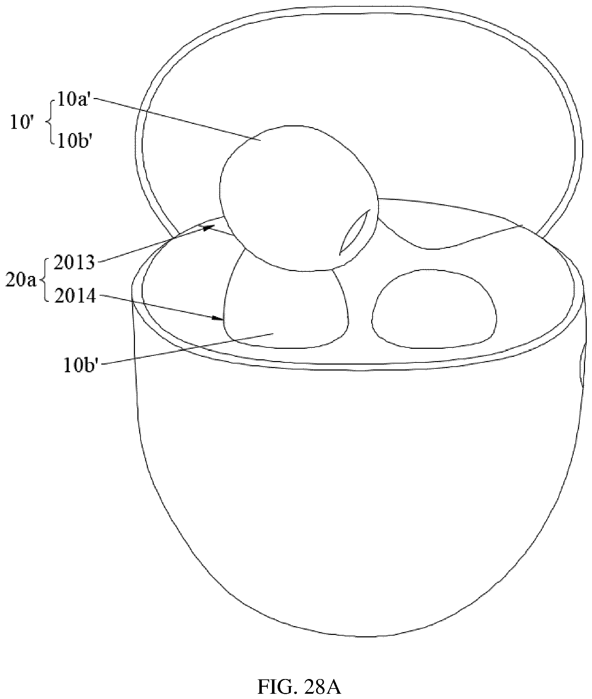

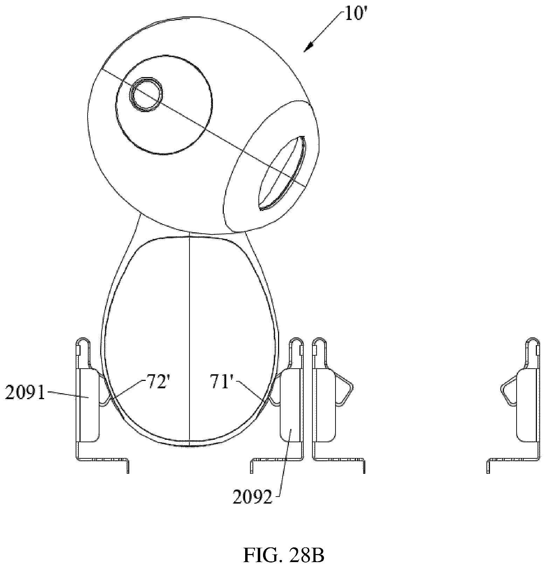

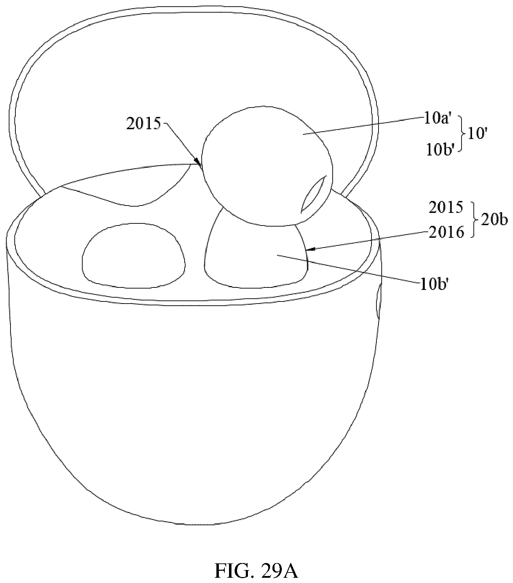

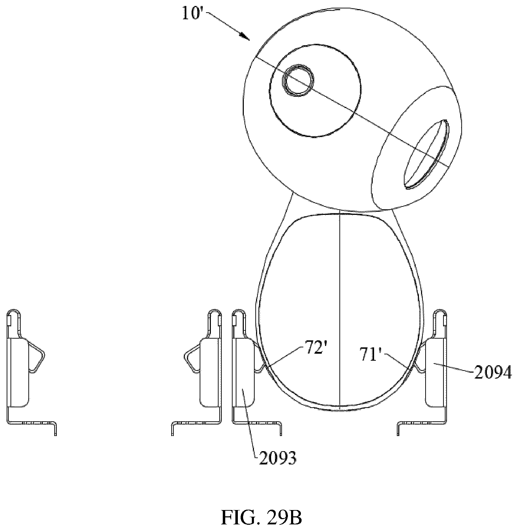

Refer to FIG. 28A to FIG. 29B. FIG. 28A is a diagram of a structure of the earphone assembly 100 shown in FIG. 18 in another use state, FIG. 28B is a diagram of a partial structure of the earphone assembly 100 shown in FIG. 28A, FIG. 29A is a diagram of a structure of the earphone assembly 100 shown in FIG. 18 in another use state, and FIG. 29B is a diagram of a partial structure of the earphone assembly 100 shown in FIG. 29A.

As shown in FIG. 28A and FIG. 28B, when the first earphone 10' is placed in the first earphone slot 20a, the stem 10b' of the first earphone 10' is placed in the first bottom slot 2014, and the earbud 10a' of the first earphone 10' faces away from the first top slot 2013, the first earphone 10' is incorrectly placed in the charging case 20. This is a case in which reverse placement is implemented through rotation. In this case, the first contact 71' of the first earphone 10' is in contact with the second electrode 2092, the second contact 72' of the first earphone 10' is in contact with the first electrode 2091, the polarities of the contacts of the first earphone 10' are opposite to the polarities of the plurality of electrodes of the charging case 20, and a reverse connection occurs.

As shown in FIG. 29A and FIG. 29B, when the first earphone 10' is placed in the second earphone slot 20b, the stem 10b" of the first earphone 10' is placed in the second bottom slot 2016, and the earbud 10a' of the first earphone 10' faces away from the second top slot 2015, the first earphone 10' is incorrectly placed in the charging case 20. This is a case in which reverse placement is implemented through rotation. In this case, the first contact 71' of the first earphone 10' is in contact with the fourth electrode 2094, the second contact 72' of the first earphone 10' is in contact with the third electrode 2093, the polarities of the contacts of the first earphone 10' are opposite to the polarities of the plurality of electrodes of the charging case 20, and a reverse connection occurs.

In the foregoing two cases of reverse connection, an anti-reverse connection circuit may be disposed in the first earphone 10' and the second earphone 10" in the earphone assembly 100. The anti-reverse connection circuit is connected in series between the first contact or the second contact and a charging circuit. The anti-reverse connection circuit is configured to: be turned on when the first earphone 10' or the second earphone 10" is correctly connected to the charging case 20, and be turned off when the first earphone 10' or the second earphone 10" is reversely connected to the charging case 20, to effectively avoid damage to the next circuits of the first earphone 10' and the second earphone 10" when the first earphone 10' or the second earphone 10" is incorrectly placed in the charging case 20. The anti-reverse connection circuit may include one or more of devices such as a MOS transistor, a resistor, a capacitor, a diode, and a magnetic bead. The MOS transistor is a metal-oxide semiconductor field-effect transistor, which is briefly referred to as a metal-oxide semiconductor field-effect transistor (Metal-Oxide Semiconductor Field-Effect Transistor, MOSFET).

A design solution of the anti-reverse connection circuit of the first earphone 10' is described below by using an example. The anti-reverse connection circuit of the second earphone 10" is the same as or similar to the anti-reverse connection circuit of the first earphone 10'. Details are not described below.

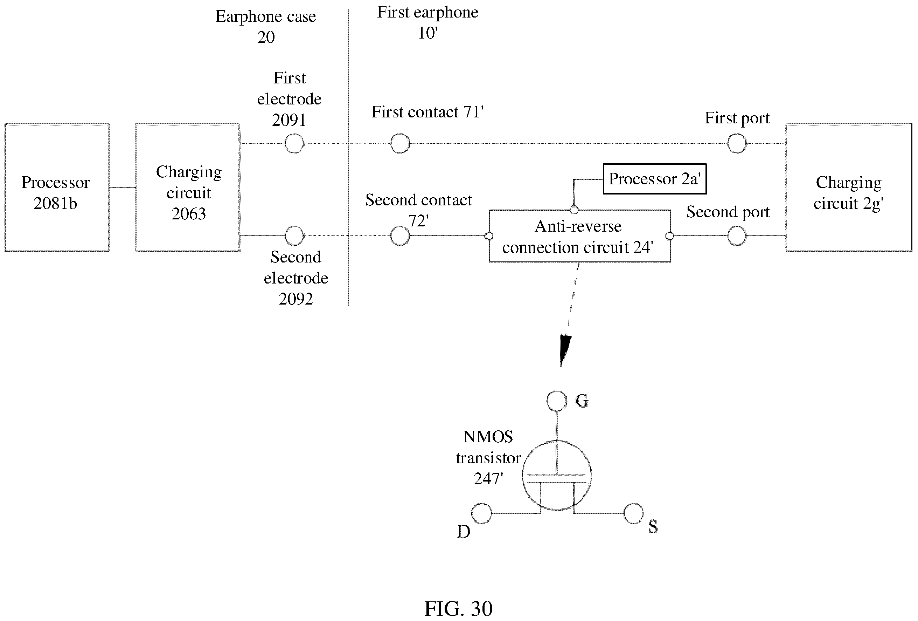

Refer to FIG. 30. FIG. 30 is a diagram of some circuits of the earphone assembly 100 shown in FIG. 18 in some embodiments.

In some embodiments, the charging case 20 further includes a charging circuit 2063, and the charging circuit 2063 is electrically connected to the first electrode 2091 and the second electrode 2092. In the first earphone 10', the first earphone 10' includes an anti-reverse connection circuit 24' and a charging circuit 2g', the anti-reverse connection circuit 24' is connected in series between the second contact 72' and the charging circuit 2g', and the anti-reverse connection circuit 24' is configured to be turned on when the first contact 71' is in contact with the first electrode 2091 and the second contact 72' is in contact with the second electrode 2092, and is further configured to be turned off when the first contact 71' is in contact with the second electrode 2092 and the second contact 72' is in contact with the first electrode 2091. For example, the first contact 71' of the first earphone 10' is electrically connected to a first port of the charging circuit 2g', and the second contact 72' is electrically connected to a second port of the charging circuit 2g' by using the anti-reverse connection circuit 24'.

In this embodiment, the anti-reverse connection circuit 24' is turned on when the first earphone 10' is correctly connected to the charging case 20, and is turned off when the first earphone 10' is reversely connected to the charging case 20, to effectively avoid a case in which the next circuit is damaged when the first earphone 10' is incorrectly placed in the charging case 20.

The anti-reverse connection circuit 24' may be turned on or off when the first contact 71' is in contact with the third electrode 2093 and the second contact 72' is in contact with the fourth electrode 2094. The anti-reverse connection circuit 24' is turned off when the first contact 71' is in contact with the fourth electrode 2094 and the second contact 72' is in contact with the third electrode 2093.

For example, a processor 2a' of the first earphone 10' is electrically connected to the anti-reverse connection circuit 24', and the processor 2a' is configured to control a working state of the anti-reverse connection circuit 24'. The processor 2a' may send an enable signal to the anti-reverse connection circuit 24'. The enable signal indicates the anti-reverse connection circuit 24' to work.

The anti-reverse connection circuit 24' may include an NMOS transistor 247', one end of the NMOS transistor 247' is electrically connected to the second contact 72', and the other end of the NMOS transistor 247' is electrically connected to the second port of the charging circuit 2g'. A drain (namely, drain, D) of the NMOS transistor 247' is electrically connected to the second contact 72', a source (namely, source, S) of the NMOS transistor 247' is electrically connected to the second port of the charging circuit 2g', and a gate (namely, gate, G) of the NMOS transistor 247' may be electrically connected to the processor 2a'. When the first earphone 10' is correctly connected to the charging case 20, Vgs of the NMOS transistor 247' is greater than Vth, and the NMOS transistor 247' is turned on. When the first earphone 10' is reversely connected to the charging case 20, Vgs of the NMOS transistor 247' is less than Vth, and the NMOS transistor 247' is turned off. In some other embodiments, a third port 244' is not connected to the processor 2a', but is connected to another circuit or power supply. This is not strictly limited in this embodiment of this application.

An equivalent circuit of the NMOS transistor 247' may include a MOS transistor part, a parasitic capacitor, and a body diode that are connected in parallel.

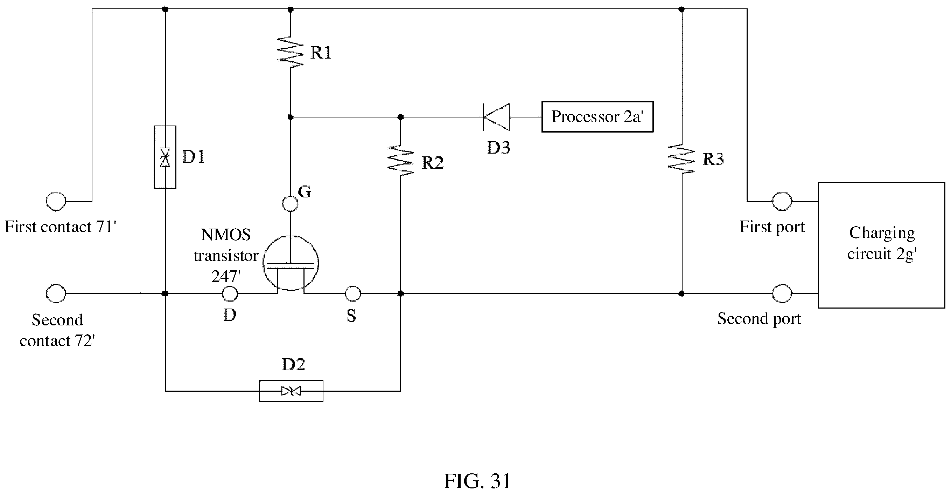

Refer to FIG. 31. FIG. 31 is a diagram of some circuits of the first earphone 10' shown in FIG. 30 in some other embodiments. The first earphone 10' in this embodiment may include most technical features of the first earphone 10' corresponding to FIG. 30. Same content of the two earphones is not described. The following mainly describes a difference between the two earphones.

In some embodiments, the first earphone 10' may further include a first resistor R1 and a second resistor R2, and the first resistor R1 and the second resistor R2 form a voltage divider circuit. The first resistor R1 and the second resistor R2 are connected in series between the first contact 71' and the second contact 72', and the gate G of the NMOS transistor 247' is further electrically connected between the first resistor R1 and the second resistor R2. When the first earphone 10' is correctly connected to the charging case 20, a first voltage (for example, 5 V) exists between the first contact 71' and the second contact 72', and the first resistor R1 and the second resistor R2 perform voltage division, so that a voltage exists at the gate G of the NMOS transistor 247', and the NMOS transistor 247' is turned on.

In some use scenarios, the first earphone 10' is correctly placed in the first earphone slot 20a in the charging case 20. When in-case presence detection is performed by using the first contact 71' and the second contact 72', a detection voltage exists between the first contact 71' and the second contact 72', and the first resistor R1 and the second resistor R2 perform voltage division, so that a voltage exists at the gate G of the NMOS transistor 247', and the NMOS transistor 247' is turned on. When the first earphone 10' communicates with the charging case 20, if the charging case 20 outputs a signal 1 (a high level), the first resistor R1 and the second resistor R2 perform voltage division, so that a voltage exists at the gate G of the NMOS transistor 247', and the NMOS transistor 247' is turned on; or if the charging case 20 outputs a signal 0 (a low level), the processor 2a' outputs the enable signal, so that a voltage exists at the gate G of the NMOS transistor 247', and the NMOS transistor 247' is turned on. When the charging case 20 charges the first earphone 10', a charging voltage exists between the first contact 71' and the second contact 72', and the first resistor R1 and the second resistor R2 perform voltage division, so that a voltage exists at the gate G of the NMOS transistor 247', and the NMOS transistor 247' is turned on.

Resistance values of the first resistor R1 and the second resistor R2 may be equal or may not be equal, and may be set based on a requirement in a specific case. This is not strictly limited in this embodiment of this application.

In some embodiments, the first earphone 10' may further include a third resistor R3, two ends of the third resistor R3 are respectively electrically connected to the first port and the second port of the charging circuit 2g', and the third resistor R3 is configured to implement impedance matching. In some other embodiments, the third resistor R3 may not be disposed on the first earphone 10'. This is not strictly limited in this embodiment of this application.

In some embodiments, the first earphone 10' may further include a first transient voltage suppressor D1 and/or a second transient voltage suppressor D2, two ends of the first transient voltage suppressor D1 are respectively electrically connected to the first contact 71' and the second contact 72', and two ends of the second transient voltage suppressor D2 are respectively electrically connected to the drain D and the source S of the NMOS transistor 247'. The transient voltage suppressor (Transient Voltage Suppressor, TVS) is a highly efficient protection device in a form of a diode. In this embodiment, the first transient voltage suppressor D1 and the second transient voltage suppressor D2 are disposed to prevent the first earphone 10' from generating static electricity, so as to improve reliability and user experience. In some other embodiments, the first transient voltage suppressor D1 and/or the second transient voltage suppressor D2 may not be disposed on the first earphone 10'. This is not strictly limited in this embodiment of this application.

In some embodiments, the first earphone 10' may further include a diode D3, a positive electrode of the diode D3 is connected to the processor 2a', and a negative electrode is connected to the gate G of the NMOS transistor 247', to prevent a voltage from flowing back into the processor 2a', and lower a risk that the processor 2a' is damaged. In some other embodiments, the diode D3 may not be disposed on the first earphone 10'. This is not strictly limited in this embodiment of this application.

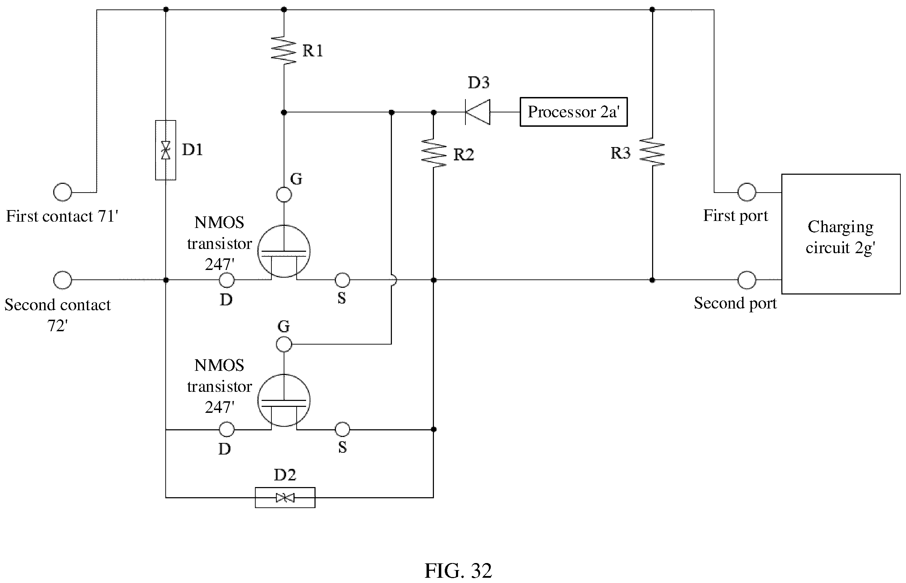

Refer to FIG. 32. FIG. 32 is a diagram of some circuits of the first earphone 10' shown in FIG. 30 in some other embodiments. The first earphone 10' in this embodiment may include most technical features of the first earphone 10' corresponding to FIG. 31. Same content of the two earphones is not described. The following mainly describes a difference between the two earphones.

In some embodiments, the anti-reverse connection circuit 24' may include a plurality of NMOS transistors 247' connected in parallel, to reduce impedance and increase a through current, so as to improve charging efficiency. In addition, a risk that the NMOS transistor 247' is damaged can be lowered. In FIG. 32, an example in which the anti-reverse connection circuit 24' includes two NMOS transistors 247' is used for illustration. In some other embodiments, the anti-reverse connection circuit 24' may alternatively include three or more NMOS transistors 247'.

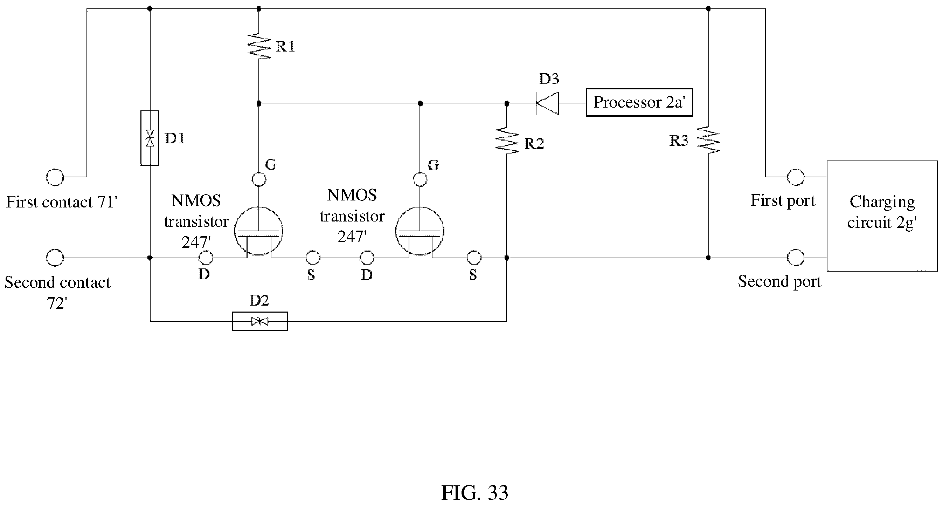

Refer to FIG. 33. FIG. 33 is a diagram of some circuits of the first earphone 10' shown in FIG. 30 in some other embodiments. The first earphone 10' in this embodiment may include most technical features of the first earphone 10' corresponding to FIG. 31. Same content of the two earphones is not described. The following mainly describes a difference between the two earphones.

In some embodiments, the anti-reverse connection circuit 24' may include a plurality of NMOS transistors 247' connected in series. In this case, reliability of the anti-reverse connection circuit 24' is high, to effectively prevent a risk that the next circuit of the first earphone 10' is damaged when the first earphone 10' is reversely connected to the charging case 20.

In the embodiments shown in FIG. 30 to FIG. 33, a first port of the first earphone 10' may be an input port (IN), the polarity of the first contact 71' is positive, a second port is an output port (OUT), and the polarity of the second contact 72' is negative. Correspondingly, the polarity of the first electrode 2091 of the charging case 20 is positive, and the polarity of the second electrode 2092 is negative. Alternatively, a first port of the first earphone 10' may be an output port (OUT), the polarity of the first contact 71' is negative, a second port is an input port (IN), and the polarity of the second contact 72' is positive. Correspondingly, the polarity of the first electrode 2091 of the charging case 20 is negative, and the polarity of the second electrode 2092 is positive.

In some other embodiments, the anti-reverse connection circuit 24' may alternatively be connected in series between the first contact 71' and the first port of the charging circuit 2g'. That is, the first contact 71' of the first earphone 10' is electrically connected to the first port of the charging circuit 2g' by using the anti-reverse connection circuit 24', and the second contact 72' is electrically connected to the output port of the charging circuit 2g'. In this case, in the circuit of the first earphone 10', the drain D of the NMOS transistor 247' is electrically connected to the first contact 71', and the source S of the NMOS transistor 247' is electrically connected to the first port of the charging circuit 2g'. For another circuit structure, refer to the related descriptions in the foregoing embodiments. Details are not described herein.

In the foregoing embodiment, the anti-reverse connection circuit 24' may further cooperate with software of the earphone, to ensure that when the first earphone 10' and the second earphone 10" are correctly connected to the charging case 20, normal communication and charging can be performed, and when the first earphone 10' and the second earphone 10" are reversely connected to the charging case 20, a component such as the charging circuit 2g' of the charging case 20 and the next circuit such as the charging circuit 2g' of the earphone are protected, so as to improve reliability of the earphone assembly 100.

In some embodiments, an anti-reverse connection function is enabled by default for software of the first earphone 10' and the second earphone 10". That is, the processor 2a' sends the enable signal to the anti-reverse connection circuit 24' by default, so that the anti-reverse connection circuit 24' is in the working state. In this case, when the first earphone 10' and the second earphone 10" are correctly connected to the charging case 20, charging and communication can be implemented; and when the first earphone 10' and the second earphone 10" are reversely connected to the charging case 20, the next circuits of the first earphone 10' and the second earphone 10" are normal.

In some other embodiments, an anti-reverse connection function is not enabled by default for software of the first earphone 10' and the second earphone 10", but the anti-reverse connection function is enabled in some scenarios. For example, the first earphone 10' and the second earphone 10" may determine, based on an in-case/out-case presence detection status, whether to enable the anti-reverse connection function. For example, the first earphone 10' includes an in-case presence detection component (for example, a Hall sensor), the in-case presence detection component is electrically connected to the processor 2a', the in-case presence detection component is configured to detect whether the first earphone 10' is accommodated in the first earphone slot 20a in the charging case 20, and the processor 2a' is configured to control the anti-reverse connection circuit 24' to work when the first earphone 10' is accommodated in the first earphone slot 20a. The first earphone 10' and the second earphone 10" may further determine, based on other status changes of the earphone, including but not limited to changes of status registers such as a sensor and the charging circuit 2g', whether to enable the anti-reverse connection function.

To prevent failure or low accuracy of software control of the first earphone 10' and the second earphone 10" in some use scenarios, the anti-reverse connection function may be enabled by default in some scenarios. For example, when the first earphone 10' is powered off or a battery level of the first earphone 10' is insufficient, the anti-reverse connection function is enabled by default. In this case, reliability of the first earphone 10' and the second earphone 10" is higher.

In some embodiments, working states of charging circuits 2g' of the first earphone 10' and the second earphone 10" may be controlled, to ensure that when the first earphone 10' and the second earphone 10" are correctly connected to the charging case 20, normal communication and charging can be performed, and when the first earphone 10' and the second earphone 10" are reversely connected to the charging case 20, the next circuits are not damaged, so as to improve reliability of the earphone assembly 100.

For example, in the first earphone 10', the first earphone 10' may include the processor 2a', the charging circuit 2g', and the in-case presence detection component. The processor 2a' is electrically connected to the charging circuit 2g' and the in-case presence detection component, the charging circuit 2g' is electrically connected to the first contact 71' and the second contact 72', the in-case presence detection component is configured to detect whether the first earphone 10' is accommodated in the first earphone slot 20a, and the processor 2a' is configured to control the charging circuit 2g' to work when the first earphone 10' is accommodated in the first earphone slot 20a. Herein, "the first earphone 10' is accommodated in the first earphone slot 20a" means that the first earphone 10' is placed in the first earphone slot 20a in a correct posture, and the first earphone 10' is correctly connected to the charging case 20.

The in-case presence detection component may include a Hall sensor. The first earphone 10' may determine, by determining a relationship between a detected value of the Hall sensor and a specified range, whether the earphone is placed in the case in a correct posture. For example, when the first earphone 10' is placed in the case in a correct posture, the detected value of the Hall sensor falls within the specified range; or when the first earphone 10' is placed in the case in an incorrect posture (for example, is rotated or is not completely placed in place), the detected value of the Hall sensor falls outside the specified range. In some other embodiments, specific composition and a detection manner of the in-case presence detection component and a determining manner of the processor 2a' may alternatively have other implementations. This is not strictly limited in this embodiment of this application.

Similarly, in the second earphone 10", the second earphone 10" may include a processor 2a", a charging circuit 2g", and an in-case presence detection component. The processor 2a" is electrically connected to the charging circuit 2g" and the in-case presence detection component, the charging circuit 2g" is electrically connected to the first contact 71" and the second contact 72", the in-case presence detection component is configured to detect whether the second earphone 10" is accommodated in the second earphone slot 20b, and the processor 2a" is configured to control the charging circuit 2g" to work when the second earphone 10" is accommodated in the second earphone slot 20b.

In some embodiments, as shown in FIG. 30, the charging case 20 includes a processor 2081b and the charging circuit 2063, the processor 2081b is electrically connected to the charging circuit 2063, and the charging circuit 2063 is electrically connected to the first electrode 2091 and the second electrode 2092. The processor 2081b of the charging case 20 may be integrated into the main control chip 2081a. For example, the processor 2081b may be configured to: when the first earphone 10' is accommodated in the first earphone slot 20a, obtain the battery level of the first earphone 10' through the charging circuit 2063, the first electrode 2091, and the second electrode 2092, and when the battery level of the first earphone 10' is less than or equal to a threshold, control the charging circuit 2063 to charge the first earphone 10'.

A working mode of the charging circuit includes a communication mode and a charging mode, and the two modes are time-division multiplexed. In some use scenarios, after the charging case 20 is opened, the charging circuit 2063 is in the communication mode, and the processor 2081b continuously performs polling through the charging circuit 2063, to detect whether the first earphone 10' is placed in the case. After detecting that the first earphone 10' is placed in the case, the processor 2081b obtains the battery level of the first earphone 10' through the charging circuit 2063, and determines whether the first earphone 10' needs to be charged. When the battery level of the first earphone is less than or equal to the threshold, the processor 2081b determines that the first earphone 10' needs to be charged, and controls the charging circuit 2063 to switch to the charging mode and charge the first earphone 10'. After charging is performed for a specific time, the processor 2081b controls the charging circuit 2063 to switch to the communication mode, reads the battery level of the first earphone 10' again, and determines whether to continue charging the first earphone 10'. This is repeated for one or more times. When the processor 2081b determines that the first earphone 10' is fully charged, charging is stopped. When determining that the battery level of the first earphone 10' is sufficient (for example, greater than 90%), or a voltage of the first earphone 10' is sufficient, the processor 2081b may control the charging circuit 2063 to reduce a charging current.

In this embodiment, a dual-contact solution is used for the first earphone 10', and a dual-electrode solution is correspondingly used for the charging case 20. Therefore, in a working process of the assembly 100 of the first earphone 10', the two contacts of the first earphone 10' and the two electrodes of the charging case 20 are switched between the communication mode and the charging mode. In some other embodiments, the first earphone 10' may alternatively have three contacts, where one contact is used as a shared ground, another contact is used for communication, and the last contact is used for charging, and the electrodes of the charging case 20 are correspondingly disposed. In this case, the communication mode and the charging mode may be simultaneously run in the assembly 100 of the first earphone 10', and charging efficiency is high.

The foregoing descriptions correspond to a communication and charging process between the charging case 20 and the first earphone 10'. A communication and charging process between the charging case 20 and the second earphone 10" is the same as or similar to the communication and charging process between the charging case 20 and the second earphone 10". Details are not described herein. There may be two charging circuits 2063, one is connected to the first electrode 2091 and the second electrode 2092, and the other is connected to the third electrode 2093 and the fourth electrode 2094. In some other embodiments, there may alternatively be one charging circuit 2063, and the charging circuit 2063 is connected to the first electrode 2091, the second electrode 2092, the third electrode 2093, and the fourth electrode 2094.

The foregoing embodiments are merely used to describe some technical solutions of this application, but are not intended to limit the technical solutions. Although this application is described in detail with reference to the foregoing embodiments, persons of ordinary skill in the art should understand that provided that no conflict occurs, they may still make modifications to the technical solutions described in the foregoing embodiments, make equivalent replacements to some technical features thereof, or combine the technical solutions described in different embodiments, without departing from the scope of the technical solutions of embodiments of this application.

## Claims

1. An earphone assembly, comprising a charging case, a first earphone, and a second earphone, wherein
the charging case has a first earphone slot and a second earphone slot that are disposed at an interval;
the charging case comprises a first electrode, a second electrode, a third electrode, and a fourth electrode, both the first electrode and the second electrode are at least partially located in the first earphone slot, both the third electrode and the fourth electrode are at least partially located in the second earphone slot, the second electrode and the third electrode are located between the first electrode and the fourth electrode, a polarity of the first electrode is the same as a polarity of the third electrode, and a polarity of the second electrode is the same as a polarity of the fourth electrode;
the first earphone comprises a first contact and a second contact that are disposed at an interval, the second earphone comprises a first contact and a second contact that are disposed at an interval, a polarity of the first contact of the second earphone is the same as a polarity of the first contact of the first earphone, and a polarity of the second contact of the second earphone is the same as a polarity of the second contact of the first earphone;
the first earphone is detachably accommodated in the first earphone slot, the first contact of the first earphone is in contact with the first electrode, and the second contact of the first earphone is in contact with the second electrode; and
the second earphone is detachably accommodated in the second earphone slot, the first contact of the second earphone is in contact with the third electrode, and the second contact of the second earphone is in contact with the fourth electrode.

2. The earphone assembly according to claim 1, wherein both the first contact of the first earphone and the second contact of the first earphone are fastened to a housing of the first earphone, and are exposed relative to the housing of the first earphone;
both the first contact of the second earphone and the second contact of the second earphone are fastened to a housing of the second earphone, and are exposed relative to the housing of the second earphone; and
the housing of the first earphone and the housing of the second earphone are of mutually symmetric structures, the first contact of the first earphone is symmetrically disposed with the second contact of the second earphone, and the second contact of the first earphone is symmetrically disposed with the first contact of the second earphone.

3. The earphone assembly according to claim 1 or 2, wherein in the first earphone, the first earphone comprises an anti-reverse connection circuit and a charging circuit, the anti-reverse connection circuit is connected in series between the first contact or the second contact and the charging circuit, and the anti-reverse connection circuit is configured to be turned on when the first contact is in contact with the first electrode and the second contact is in contact with the second electrode, and is further configured to be turned off when the first contact is in contact with the second electrode and the second contact is in contact with the first electrode.

4. The earphone assembly according to claim 3, wherein the anti-reverse connection circuit comprises an NMOS transistor, a drain of the NMOS transistor is electrically connected to the first contact or the second contact, and a source of the NMOS transistor is electrically connected to the charging circuit.

5. The earphone assembly according to claim 4, wherein the first earphone further comprises a processor, the processor is electrically connected to a gate of the NMOS transistor, and the processor is configured to control a working state of the anti-reverse connection circuit.

6. The earphone assembly according to claim 4 or 5, wherein the first earphone further comprises a first resistor and a second resistor, the first resistor and the second resistor are connected in series between the first contact and the second contact, and the gate of the NMOS transistor is electrically connected between the first resistor and the second resistor.

7. The earphone assembly according to any one of claims 4 to 6, wherein the first earphone further comprises a first transient voltage suppressor, and two ends of the first transient voltage suppressor are respectively electrically connected to the first contact and the second contact; and/or
the first earphone further comprises a second transient voltage suppressor, and two ends of the second transient voltage suppressor are respectively electrically connected to the drain and the source of the NMOS transistor.

8. The earphone assembly according to any one of claims 4 to 7, wherein the anti-reverse connection circuit comprises one NMOS transistor; or
the anti-reverse connection circuit comprises a plurality of NMOS transistors, and the plurality of NMOS transistors are connected in series or in parallel.

9. The earphone assembly according to any one of claims 3 to 8, wherein the first earphone further comprises a third resistor, and two ends of the third resistor are respectively connected to two ports of the charging circuit.

10. The earphone assembly according to any one of claims 5 to 9, wherein the first earphone further comprises an in-case presence detection component, the in-case presence detection component is electrically connected to the processor, the in-case presence detection component is configured to detect whether the first earphone is accommodated in the first earphone slot, and the processor is further configured to control the anti-reverse connection circuit to work when the first earphone is accommodated in the first earphone slot.

11. The earphone assembly according to any one of claims 1 to 10, wherein in the first earphone, the first earphone comprises the processor, the charging circuit, and the in-case presence detection component, the processor is electrically connected to the charging circuit and the in-case presence detection component, the charging circuit is electrically connected to the first contact and the second contact, the in-case presence detection component is configured to detect whether the first earphone is accommodated in the first earphone slot, and the processor is configured to control the charging circuit to work when the first earphone is accommodated in the first earphone slot.

12. The earphone assembly according to any one of claims 1 to 11, wherein in the charging case, the charging case further comprises a processor and a charging circuit, the charging circuit is electrically connected to the processor, the first electrode, and the second electrode, and the processor is configured to: when the first earphone is accommodated in the first earphone slot, obtain a battery level of the first earphone through the charging circuit, the first electrode, and the second electrode, and when the battery level of the first earphone is less than or equal to a threshold, control the charging circuit to charge the first earphone.

13. The earphone assembly according to any one of claims 1 to 12, wherein the housing of the first earphone is of an asymmetric structure, the first earphone slot is of an asymmetric structure, and a shape of the first earphone slot is the same as a shape of the housing of the first earphone.

14. The earphone assembly according to claim 13, wherein in the first earphone, the housing comprises a main housing and a front housing, the front housing is fastened on a front side of the main housing, internal space of the front housing communicates with internal space of the main housing, and when the earphone is being worn, the front housing faces a user ear;
the main housing comprises a first end that is in contact with the front housing and a second end that is far away from the front housing, and in a direction from the first end to the second end of the main housing, an outer contour of the main housing first shrinks and then expands; and
both the first contact and the second contact are fastened to the main housing and exposed relative to the main housing.

15. The earphone assembly according to claim 14, wherein in the first earphone, the main housing comprises a main housing member, the main housing member comprises a top part, a middle part, and a bottom part that are sequentially connected, the top part of the main housing member is connected to the front housing, and both the first contact and the second contact are fastened to the bottom part of the main housing member;
the first earphone slot comprises a first bottom slot and a first top slot that are located in a case body of the charging case; and
when the first earphone is placed in the first earphone slot, the bottom part of the main housing member is located in the first bottom slot, both the front housing and the top part of the main housing member are partially located in the first top slot and partially located outside the case body, and the middle part of the main housing member is located outside the case body.
